(19) Europäisches Patentamt
European Patent Office
Office européen des brevets

(11) **EP 3 211 370 A1**

(12) **DEMANDE DE BREVET EUROPEEN**

(43) Date de publication:
**30.08.2017 Bulletin 2017/35**

(51) Int Cl.:
***G01C 17/38*** (2006.01)   ***G01C 21/16*** (2006.01)

(21) Numéro de dépôt: **16305230.1**

(22) Date de dépôt: **29.02.2016**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**
Etats de validation désignés:
**MA MD**

(71) Demandeur: **Movea**
**38000 Grenoble (FR)**

(72) Inventeur: **YOUSSEF, Joe**
**38000 GRENOBLE (FR)**

(74) Mandataire: **Brunelli, Gérald**
**Marks & Clerk France**
**Immeuble Visium**
**22, avenue Aristide Briand**
**94117 Arcueil Cedex (FR)**

(54) **PROCEDE DE FILTRAGE DES SIGNAUX ISSUS D'UN ENSEMBLE CAPTEUR COMPRENANT AU MOINS UN CAPTEUR DE MESURE D'UN CHAMP PHYSIQUE VECTORIEL SENSIBLEMENT CONSTANT DANS LE TEMPS ET L'ESPACE DANS UN REPERE DE REFERENCE**

(57)  Procédé de filtrage des signaux issus d'un ensemble capteur (EC) comprenant au moins un capteur de mesure d'un champ physique vectoriel sensiblement constant dans le temps et l'espace dans un repère de référence, ledit ensemble capteur (EC) étant lié en mouvement à un repère mobile, mobile dans le repère de référence, le procédé comprenant les étapes consistant à :
- appliquer une première transformation (T1) aux mesures d'un capteur de mesure de l'ensemble capteur (EC), fournies dans le repère mobile, vers un pseudo repère de référence, à l'aide d'un premier opérateur (R(t)) de changement de repère en rotation entre le repère mobile et le pseudo repère de référence; et
- appliquer un filtrage (FILT) aux mesures ainsi transformées dans le pseudo repère de référence; et appliquer une deuxième transformation (T2), inverse de ladite première transformation, aux mesures filtrées par ledit filtrage (FILT), du repère de référence vers le repère mobile, à l'aide d'un deuxième opérateur ($R^{-1}(t)$) de changement de repère en rotation entre le pseudo repère de référence et le repère mobile, inverse dudit premier opérateur (R(t)).

FIG.2

EP 3 211 370 A1

**Description**

L'invention porte sur un procédé de filtrage des signaux issus d'un ensemble capteur comprenant au moins un capteur de mesure sensible à un champ physique vectoriel sensiblement invariant dans l'espace et dans le temps dans un référentiel lié à la Terre, i.e. dans un repère de référence EF pour "Earth Frame" en langue anglaise. En d'autres termes, l'invention permet de réduire ou séparer les contributions non souhaitées au signal capté par un tel capteur de mesure, c'est-à-dire les contributions qui s'ajoutent au champ physique. Elle a, par exemple, vocation à s'appliquer à la mesure du champ physique de gravité généré par la Terre, capté par un accéléromètre fixé à une plateforme mobile, doté d'un repère BF pour "Body Frame" en langue anglaise, par exemple, ou à la mesure du champ physique du champ magnétique généré par la Terre, capté par un magnétomètre fixé à une plateforme mobile, comme autre exemple.

Un tel procédé est utile notamment dans le domaine des centrales inertielles, domaine dans lequel l'ingénieur s'intéresse à la création de dispositifs de mesure de l'orientation des objets dans l'espace, basés sur la mesure de champs physiques, comme la gravité ou le champ magnétique terrestre. L'objectif est alors de fournir l'orientation de l'objet avec son repère BF dans le repère de référence EF.

Par extension, l'invention à également vocation à s'appliquer au filtrage du signal issu d'un capteur de mesure d'un champ physique dont le comportement dans l'espace et dans le temps est connu a priori. Ainsi, si le champ physique a un comportement connu a priori, par exemple par la connaissance d'un modèle de ce comportement dans le temps et l'espace, l'invention peut s'appliquer.

De nombreux dispositifs, tels des téléphones portables ou smartphones, des tablettes tactiles, des ordinateurs mobiles, des manettes de jeu, des télécommandes à capteurs de mouvement, des dispositifs à capteurs pour la mesure du mouvement humain destinés à des applications de monitoring de l'activité physique, qu'elles soient à vocation grand public (bracelets électroniques, lunettes interactives instrumentées, capteurs pour chaussures), sportives ou médicales, ou des récepteurs de systèmes de navigation par satellites, utilisent des capteurs embarqués, tels des magnétomètres, des accéléromètres, des gyromètres, ou également des antennes directives (pour des mesures de directions d'arrivée ou DOA pour acronyme de "Direction of Arrival" en langue anglaise).

Dans tous ces dispositifs, l'une des fonctions de base demandées par beaucoup d'applications est la mesure de l'orientation ou de l'attitude de l'objet qui embarque les capteurs, dans un repère lié à la Terre. Les contraintes qui s'imposent au concepteur sont le coût, tant en termes de matériel, qu'en termes de consommation électrique. La fonction de service demandée est de fournir une mesure de l'attitude de l'objet la plus performante possible, en filtrant efficacement les contributions "parasites" incorporées dans les signaux issus des capteurs, dues au fait que les capteurs et le système dans lequel ils sont embarqués présentent certains défauts (on les appelle bruits "endogènes"), ou à la nature même de la mesure physique effectuée (il s'agira alors de bruits appelés "exogènes").

La présente invention propose une méthode efficace tant du point de vue de la métrologie (science des mesures et ses applications) que du point de vue de la quantité de calculs nécessaires, de filtrage des mesures issues d'un capteur d'un champ physique, comme le champ de gravité Terrestre, ou le Champ magnétique Terrestre (mesurés alors respectivement par un accéléromètre et un magnétomètre).

La présente invention permet également, grâce à une étape de séparation des signaux en une contribution due aux champs physiques et une contribution due aux perturbations (accélérations propres, perturbations magnétiques, bruits endogènes), de faire une estimation de l'orientation d'un objet (doté de son repère BF) dans un référentiel utilisateur (généralement un repère lié fixement à la Terre formé d'un plan horizontal et d'une direction verticale, noté ici EF), l'orientation étant par exemple matérialisée par une matrice de rotation, un quaternion, des angles selon une des conventions d'Euler ou de Cardan, l'objet étant animé d'un mouvement de rotation et/ou de translation, et donc soumis, selon ses mouvements à une accélération propre et potentiellement à des perturbations magnétiques (variations inconnues autour d'un champ sensiblement uniforme dans le référentiel lié à la Terre EF dans l'environnement proche et constant dans le temps), et à un dispositif mettant en oeuvre un tel procédé.

Comme mentionné précédemment, l'estimation de l'orientation permet de résoudre toute une classe de problèmes et d'alimenter de nombreuses applications, telles des jeux pour lesquels le mouvement de l'objet est utilisé à des fins d'interaction entre l'univers du jeu et l'utilisateur, la réalité augmentée pour laquelle l'orientation de l'objet est nécessaire au rendu de réalité augmentée, les fonctions de contrôle d'un curseur à l'écran à l'aide de l'objet instrumenté, les fonctions de repérage géographique, de navigation pédestres pour lesquelles l'une des fonction de base est la mesure de l'orientation de l'objet instrumenté, des accessoires, comme des bracelets instrumentés, ou des capteurs portés au pied pour l'analyse de la foulée...

La fonction d'estimation de l'attitude à partir des capteurs de mouvement est généralement réalisée à partir d'accéléromètres, de magnétomètres et de gyromètres. De par la nature centrale de la fonction d'estimation de l'attitude et de sa présence dans la plupart des applications de mesure du mouvement, il est avantageux d'en réduire la consommation électrique tout en apportant une performance métrologique améliorée.

L'obtention de l'orientation d'un objet nécessite généralement la mise en oeuvre de plusieurs capteurs, faisant partie d'un ensemble désigné par ensemble capteur, dispositif de capture de mouvement, ou centrale d'attitude.

Des microsystèmes électromécaniques ou capteurs MEMS (pour acronyme de "Micro-Electro-Mechanical Systems" en langue anglaise) peuvent être utilisés pour constituer cette centrale, ceux-ci présentent l'avantage d'être peu encombrants, de coût et de consommation électrique réduits. Ces composants peuvent être combinés avec des modules de calculs et embarqués dans un système sur puce ou System On Chip en langue anglaise, combinant les capteurs et la capacité de calcul.

L'ensemble capteur offrant une telle combinaison de capteurs MEMS est souvent désigné sous le nom de centrale inertielle ou IMU comme acronyme de "Inertial Measurement Unit" en langue anglaise. Une centrale d'attitude comporte les capteurs (par exemple accéléromètre, magnétomètre et gyromètre) ainsi que des moyens de traitement (de calcul) nécessaires pour déterminer l'attitude. Le magnétomètre n'est pas à proprement parler un capteur de mesure "inertiel" contrairement à l'accéléromètre ou au gyromètre, cependant on considèrera que le terme "Inertial Measurement Unit" peut englober dans sa définition la plus large un magnétomètre. Les moyens de calcul peuvent être séparés du boîtier comprenant les capteurs ou inclus dans le boîtier. L'emploi de tels capteurs MEMS permet d'envisager l'utilisation de centrales d'attitude dans des domaines d'applications variés, grand public, tels le jeu, la réalité augmentée, les interfaces homme-machine basées sur le mouvement, le domaine biomédical, le suivi (monitoring) d'activités physiques, la rééducation fonctionnelle, l'analyse des mouvements des sportifs, les domaines automobile, robotique, de l'animation en trois dimensions et plus généralement dans tout domaine dans lequel on cherche à déterminer ou à observer un mouvement.

Cependant, par rapport à des capteurs non MEMS ou MEMS mais non destinés au marché grand public (notamment des capteurs de fabrication classique, non issus des micro-technologies et utilisés par exemple, dans le domaine de la navigation), ces capteurs MEMS, notamment ceux qui font l'objet d'efforts de miniaturisation importante, sont très peu onéreux, fabriqués en grandes série, mais ont pour inconvénients d'être relativement moins performants, bruités et biaisés.

Selon des principes connus de l'homme de l'art comme TRIAD (TRI-axial Attitude Deformation) ou QUEST (Quaternion ESTimator) et toutes les méthodes dérivées, il est avantageux de bâtir des solutions de mesure d'attitude ou d'orientation fondées sur la mesure de deux champs physiques vectoriels non colinéaires, soit un premier champ vectoriel et un deuxième champ vectoriel dans un repère lié au solide doté de son repère BF, de directions sensiblement constantes dans un repère de référence EF ou fixe par rapport à EF. La mesure des directions de ces champs physiques dans le repère lié au solide BF, par des capteurs adaptés, permet de fournir l'orientation du repère du solide par rapport au repère fixe EF. Les deux champs physiques usuellement mis à contribution sont le champ de gravité terrestre et le champ magnétique terrestre. Il est très simple, lorsqu'on dispose des deux décompositions de ces deux champs, selon les trois axes d'un mobile en mouvement (selon le repère BF), de déterminer l'orientation du mobile par rapport à la Terre, c'est-à-dire l'orientation du repère BF par rapport au repère EF. Un avantage important de l'invention est donc, dans cette perspective, de filtrer efficacement les champs physiques afin de les isoler des perturbations qui s'additionnent à eux lors de leurs mesures via les capteurs. On peut ainsi calculer l'attitude à partir des données filtrées par le procédé de l'invention de manière efficace. Les capteurs très classiquement utilisés pour mesurer ces champs physiques intéressants pour la mesure d'attitude sont des accéléromètres et des magnétomètres.

Une alternative en remplacement de tels capteurs de mesure des champs physiques est d'utiliser des gyromètres ou gyroscopes de grande précision, à faible dérive, et fournir une initialisation de l'attitude ou un recalage de temps à autre. En effet, la mesure des vitesses de rotation fournie par un gyromètre, permet, par une opération d'intégration temporelle, de retrouver l'orientation du mobile auquel le capteur est attaché. Cependant, cette orientation est d'une part déterminée à une constante près, puisque le capteur délivre des vitesses de rotation et ne fournit pas la position en rotation elle-même, et est sujette à la qualité du bruit et notamment du biais du capteur gyrométrique qui devient d'autant plus importante pour la qualité du résultat final que l'opération d'intégration amplifie considérablement les effets de biais, d'une manière proportionnelle au temps.

Concernant les systèmes fondés sur la mesure de deux champs physiques, ils comprennent alors naturellement un premier capteur triaxial et un deuxième capteur triaxial solidaires du solide pour mesurer les composantes des champs physiques respectivement, selon les axes des capteurs fixés au solide, donc dans le repère BF, et des moyens de détermination de la matrice de rotation du solide dans ledit repère fixe EF. Si les champ physiques sont effectivement constants dans le temps et l'espace liés au référentiel fixe EF (par exemple un repère lié à la Terre), et si les capteurs fournissent des représentations fidèles de ces champs physiques, il est alors facile de calculer une orientation selon des méthodes connues en calculant la représentation de l'orientation du solide par composition des deux mesures de champs physiques en utilisant un algorithme de type TRIAD ou QUEST. Ces algorithmes présentent l'avantage d'être simples et se présentent donc comme des candidats très intéressants pour satisfaire les contraintes de coût et de consommation électrique. Il est toutefois fréquent que les mesures des champs physiques soient entachées de perturbations qui s'additionnent aux champs physiques et l'utilisation des méthodes TRIAD ou QUEST sont alors rendues difficiles. Il convient alors de filtrer ou séparer les champs physiques des autres contributions, avant de pouvoir appliquer ces techniques. C'est ce que permet de faire l'invention, de façon optimale.

Deux champs physiques sont présents sur la Terre et peuvent être employés pour appliquer ces techniques, le champ de gravité Terrestre et le champ Magnétique de la Terre.

Pour le champ de gravité terrestre, on dispose de modèles simples en direction et intensité. Pour la plupart des applications, le champ de gravité Terrestre est considéré comme orienté selon la verticale du lieu où le solide est présent et sa norme peut être considérée comme constante sur la Terre. Ceci est notamment le cas pour les capteurs grand public envisagés. Cependant, les capteurs du champ de gravité Terrestre sont fondés sur les principes de mesures d'accélération et, dès que le capteur est mis en mouvement dans le référentiel Terrestre, le capteur mesure les contributions du champ de gravité, mais également les contributions dues aux mouvements mêmes du solide qui porte le capteur. Ces contributions sont appelées accélérations propres. Ces contributions sont de même nature, elles sont toutes deux des accélérations. Les accélérations dites propres sont dues aux mouvements de rotation du solide (rotation qui génère des accélérations centrifuges et centripètes au point de mesure du capteur) et aux mouvements de translation du solide. Les dérivées secondes par rapport au temps des coordonnées de position du solide constituent des accélérations propres et sont mesurées par les capteurs. Ces accélérations propres sont des contributions exogènes. Elles ne sont pas dues à un défaut de technologie du capteur mais comme elles sont de même nature que l'accélération de la gravité, aussi s'additionnent-elles lors de la mesure. On constate ainsi que par nature de la mesure, pour des solides en mouvement, via un capteur d'accélération, il n'est pas possible d'accéder à une mesure du champ de gravité terrestre qui soit exemple des contributions dues aux accélérations propres. L'invention proposée permet de séparer ces contributions dues aux accélérations propres de la mesure du champ de gravité terrestre.

Il est important ici de noter que des filtrages connus, par exemple fréquentiels simples, ne sont pas aptes à séparer les contributions de la gravité et des accélérations propres. En effet, par exemple, un solide en rotation doté d'un accéléromètre vectoriel mesure la contribution de la gravité et la contribution des accélérations centripètes et centrifuges et ces deux contributions génèrent des signaux qui sont par nature dans une même bande de fréquence, puisqu'ils sont tous deux générés par les mêmes mouvements de rotation. D'une part, en supposant qu'il n'y a pas d'accélération propre (ce qui est une vue de l'esprit, cela supposerait un capteur vectoriel ponctuel avec des mouvements de rotation imprimés au solide avec l'axe de rotation instantané qui passerait par le capteur ponctuel), les mouvements de rotation dans le champ de gravité génèrent des signaux égaux à la projection du champ de gravité sur les axes de l'accéléromètre, ce qui génère bien des signaux dont le comportement fréquentiel est lié au comportement fréquentiel des mouvements de rotation. D'autre part, les accélérations propres sont elles-mêmes induites par le mouvement de rotation imprimé à l'objet (contributions centripètes, centrifuges, accélération de translation) et présentent donc un comportement fréquentiel lié au comportement fréquentiel des mouvements de rotation imprimé à l'objet. Les méthodes de filtrage passe-bas appliquées aux signaux dans le repère de l'objet BF sont donc inefficaces. Tout au plus, sur des durées longues, on peut espérer que la contribution moyenne des accélérations propres se réduit à zéro, alors que celle de la gravité s'accumule.

Concernant le champ magnétique terrestre, des modèles du champ principal sont également bien connus (WMM ou IGRF par exemple). Dans le cadre d'une fonction de centrale d'attitude, pour laquelle on souhaite déterminer l'orientation par rapport au repère terrestre, ce champ est d'un emploi indispensable en complément au champ de gravité, car sauf aux pôles magnétiques de la Terre, ce second champ physique naturel n'est pas colinéaire au champ de gravité. Aussi, sa mesure, conjointement à la mesure du champ de gravité permet d'appliquer les méthodes citées précédemment (TRIAD ou QUEST) ou des méthodes dérivées. Un seul champ physique ne permet pas de déterminer complètement l'orientation d'un mobile dans le repère terrestre. En effet, toutes les rotations autour de l'axe du champ physique laissent les mesures invariantes. Seule la donnée de la gravité ne permet pas de connaître le cap du mobile, mais seulement son inclinaison par rapport à une horizontale. Il en est de même pour la donnée seule du champ magnétique terrestre, car toutes les rotations autour de l'axe du champ terrestre laissent les mesures invariantes.

Cependant pour des raisons expliquées ci-dessous et différentes de celles concernant le champ de gravité, les mesures du champ magnétique principal de la Terre qu'il est possible de capter par un magnétomètre solidaire de l'objet mobile sont également perturbées. En effet, il est connu que, contrairement au champ de gravité, même pour des ordres de grandeurs de précision similaires à celui des accéléromètres, le champ magnétique principal terrestre dépend du lieu où l'on se trouve sur Terre, tant en norme, qu'en inclinaison (angle formé entre la direction du champ magnétique et l'horizontal) et en déclinaison (angle formé entre la direction du pôle Nord géographique et le Nord magnétique (il s'agit donc d'un angle sur le plan horizontal du point d'observation). Il est néanmoins possible de l'exploiter en considérant que la centrale d'attitude fournit son orientation par rapport au Nord magnétique local, qu'il est ensuite possible ensuite de corriger simplement, car la déclinaison magnétique du champ magnétique terrestre est connue à l'emplacement où l'on se situe sur Terre.

En sus de ce premier problème que l'on peut contourner relativement aisément, le champ physique que l'on trouve à l'endroit de la mesure est par ailleurs, non seulement composé du champ magnétique de la Terre (champ principal) que l'on connait bien, mais également des contributions magnétiques des objets, petits ou grands, qui génèrent eux-mêmes des champs magnétiques contribuant au champ ambiant. Ces perturbations magnétiques contribuent à créer un champ participant au champ ambiant, ce champ étant constant dans le temps, si les objets générant du champ magnétique restent fixes (tant dans l'espace, donc immobiles qu'en propriétés magnétiques). Selon les lois de la magnétostatique, ces contributions sont d'autant plus fortes qu'on s'approche de l'objet. Ainsi, les bâtiments d'habitation, logements, bureaux, maisons, ... notamment dotés de structures métalliques sont générateurs de champ magnétiques. Aussi, le champ magnétique ambiant n'est plus vraiment invariant dans l'espace et il est difficile de connaître ces champs. Comme une boussole peut être désorientée en présence de ces champs perturbateurs, une centrale d'attitude fondée sur la mesure du champ magnétique, qui ne tiendrait pas compte de ces perturbations, pourrait fournir une direction du Nord magnétique différente du Nord magnétique terrestre.

Si une donnée cartographiée de ces champs est disponible, ce qui nécessiterait des campagnes de mesures importantes, il est possible d'en tenir compte dans l'invention.

Pour résumer, le champ magnétique ambiant est constitué d'une part du champ principal terrestre, qui est bien connu, et qui, pour des déplacements limités dans l'espace, peut être considéré comme invariant (dans l'espace et aussi dans le temps) dans le repère Terrestre, et d'autre part par des perturbations magnétiques dues aux objets (petits ou grands) qui constituent notre environnement. Selon la connaissance que l'on a du champ magnétique ambiant, par exemple par le biais d'une cartographie, l'invention s'applique de la même manière. On peut par exemple considérer que l'on ne connait que le champ magnétique principal, qu'il est constant dans l'espace et dans le temps, compte-tenu des scénarii d'usage dans lesquels l'invention doit être appliquée. On peut également considérer un modèle de champ magnétique variable dans l'espace, soit parce que le scénario d'utilisation prévoit de grands déplacements sur la Terre, soit parce qu'on dispose d'une cartographie fine du champ ambiant dans un lieu donné.

Dans les cas les plus courants, actuellement, faute de disposer en pratique de modèles précis de champ ambiant et représentatifs des variations spatiales à courte distance du champ magnétique dues aux objets de notre environnement, on considère fréquemment un modèle de champ ambiant comme constant dans l'espace et dans le temps auxquelles s'additionnent les perturbations, inconnues. On conçoit ainsi que si le solide se déplace dans l'espace et subit des champs variables, la référence du champ magnétique n'est plus bonne, et il convient de le traiter correctement, ce que propose l'invention. Ainsi par exemple, de fortes variations du champ ambiant dans l'espace dues au passage relatif d'un objet aimanté et du solide équipé des capteurs de champ magnétique dont on veut connaitre l'orientation doivent être filtrées, ce que permet notre invention.

Tout champ qui n'est pas conforme au modèle connu doit être filtré, ce que permet l'invention. Notons que, contrairement à un accéléromètre, la mesure du champ magnétique par un magnétomètre ne dépend pas des mouvements imprimés au solide porteur du capteur de mesure. Il n'y a pas, comme on le constatait ci-dessus sur l'accéléromètre, de contribution de champ intrinsèquement créée par du mouvement. Par contre, il est bien évident que les mouvements de rotation imprimés à l'objet mobile doté d'un capteur magnétomètre vectoriel génèrent des signaux variables dans le temps, avec un comportement fréquentiel liés aux mouvements imprimés, que ce soit pour la contribution du champ principal terrestre ou pour la contribution due aux perturbations.

Notons également que dans le cadre d'un environnement "urbain" ou "industriel" ou de "transport" ou même dans le cadre d'un logement d'habitation, le solide instrumenté est potentiellement soumis à des champs électromagnétiques qui peuvent venir perturber ponctuellement ou plus durablement les mesures, par une pollution de la bande passante dans laquelle est faite la mesure du champ magnétique.

L'invention permet de réduire efficacement la contribution des perturbations magnétiques de la mesure, et ainsi d'isoler le champ magnétique principal. Ce dernier peut alors être exploité afin de déterminer l'attitude de l'objet porteur des capteurs.

Pour la mesure des mouvements humains, la bande passante généralement nécessaire est de quelques Hertz à quelques centaines de Hertz, si l'on souhaite capter les tremblements, les chocs, des vibrations ou des mouvements d'objets imprimés par le corps humain, comme une raquette de tennis, un club de golf ... Il est ainsi courant de régler les fréquences d'échantillonnage des capteurs à 50, 100 ou 200 Hz, afin de capturer la bande passante souhaitée pour le mouvement humain.

Par ailleurs, de par la nature imparfaite des capteurs, des bruits additionnels endogènes (que l'on définit comme dus aux capteurs eux-mêmes ou dus au système électronique constituant le système de mesure) s'additionnent à la mesure et contribuent également aux erreurs.

Le bruit endogène des capteurs est constitué par exemple d'une contribution de bruit thermique due aux composants électroniques. Ce bruit endogène vient s'additionner à la mesure du capteur, selon un comportement spécifique. Le bruit peut être blanc (entacher de la même manière les différentes zones du spectre) ou coloré (entacher davantage les basses ou les hautes fréquences). Il est généralement modélisé comme un phénomène aléatoire, blanc ou coloré. Tout capteur présente également un biais (i.e. le capteur délivre une valeur non nulle appelée biais, alors même qu'il serait immergé dans un champ nul), ce qui est également à prendre en compte.

Les techniques de calcul d'attitude se basant sur ces champs physiques de gravité et magnétique sont donc pénalisées par la présence, dans les mesures des accéléromètres et magnétomètres de ces contributions additionnelles aux champs de gravité et magnétique de la Terre. Plusieurs techniques sont connues, pour éliminer le mieux possible ces perturbations. Nous avons vu que les méthodes de filtrage fréquentiel des signaux générés par les capteurs ne peuvent pas efficacement isoler les contributions des champs physiques et de leur perturbation. Les techniques les plus performantes mettent en oeuvre des gyromètres. Ces capteurs mesurent les vitesses de rotation du solide auquel ils sont attachés et apportent ainsi une information de dérivée temporelle de l'attitude du solide. Cette information est complémentaire des mesures d'accélération et de champ magnétique. Ces capteurs existent en version bas coût, basse consommation, sont répandus dans les appareils grand public. L'idée sous-jacente est que les capteurs accélérométriques et magnétométriques délivrent une information proche du champ physique recherché lors des phases immobiles ou quasi immobiles, et qu'alors on peut calculer une orientation du mobile dans le repère de la terre EF alors que le gyromètre permet, lui de calculer des variations de l'orientation du mobile (et uniquement des variations), pendant les phases de mouvement dynamiques.

Un gyromètre est souvent présent dans des plateformes exploitant un accéléromètre et/ou un magnétomètre, car c'est un capteur qui délivre une information de nature complémentaire à ces deux autres capteurs, aussi, cette information est généralement déjà disponible. Ainsi, la plupart des téléphones mobiles, tablettes, télécommandes à mesure de mouvement, manettes de jeu, dispositifs d'analyse du mouvement pour la santé, ou dispositifs d'analyse de gestes sportifs, sont équipés de gyromètres, d'accéléromètres et de magnétomètres.

Ce trio A, G, M, respectivement pour accéléromètre, gyromètre et magnétomètre, est ainsi couramment présent dans ces dispositifs mobiles. Pour beaucoup de fonctions, comme la mesure d'orientation du dispositif dans le repère terrestre, c'est par la combinaison des informations mesurées par ce trio de capteurs qu'il est possible de fournir une mesure d'attitude précise, robuste, et capable de délivrer des attitudes en mode de mouvement rapide. Ainsi, les centrales d'attitudes embarquées à bord des téléphones mobiles sont maintenant couramment matériellement constituées d'un accéléromètre, d'un magnétomètre et d'un gyromètre. Tout comme pour les magnétomètres et les accéléromètres, les technologies de miniaturisation permettent de fournir ces gyromètres en masse, à moindre coût et pour une consommation électrique raisonnable. Pour une liste grandissante de fonctions, les trois capteurs accéléromètre, magnétomètre, et gyromètre sont activés en même temps, car tous participent par la nature et la qualité de l'information qu'ils délivrent à la constitution de fonctions élaborées, comme par exemple l'attitude. L'invention proposée ici permet, dans un mode de réalisation avantageux, de combiner de manière optimale les signaux d'un gyromètre avec ceux d'un accéléromètre et/ou d'un magnétomètre, afin de réaliser de manière optimale le filtrage des champs physiques de gravité et/ou du champ magnétique terrestre. L'invention peut être également utilisée pour isoler les accélérations propres et/ou les perturbations magnétiques.

Comme le montre l'état de l'art des techniques de calcul d'attitude, pour un solide dont la position est stationnaire ou lentement variable dans le temps, les positions atteintes étant alors peu génératrices d'accélérations propres, et dans le cadre d'un champ ambiant peu perturbé par rapport au champ principal de la Terre, la combinaison accéléromètre A et magnétomètre M permet de déterminer l'attitude du solide. Lors de mouvements plus accélérés, contributeurs d'accélérations propres et potentiellement qui amènent le solide à traverser des variations spatiales du champ magnétique, le gyromètre peut prendre le relais alors que les données accélérométriques et magnétométriques sont rendues peu fiables. Le gyromètre est ainsi utilisé comme fournisseur de données alimentant des techniques que l'on peut désigner comme des techniques "d'interpolation" entre deux orientations fiables fournies par l'accéléromètre et/ou le magnétomètre. Ces techniques consistent donc à faire davantage confiance aux mesures des vitesses de rotation (délivrées par le gyromètre) lors des phases de mouvement dynamiques (qui génèrent des accélérations propres), ou lors des phases de mesure de champs magnétiques perturbés, et à contrario, à faire davantage confiance aux mesures des accélérations et/ou champs magnétiques lors des phases plus stationnaires ou exemptes de perturbations magnétiques. La présente invention exploite toute l'information présente dans les signaux accélérométriques, magnétiques et gyrométriques pour isoler de façon optimale les champs de gravité et/ou le champ magnétique terrestre.

Il existe plusieurs méthodes connues pour obtenir, à partir de mesures fournies par des accéléromètres, des magnétomètres et des gyromètres, une estimation de l'orientation de l'objet. Il existe notamment des méthodes de fusion des mesures issues des trois capteurs, mettant en oeuvre un observateur ou calculateur, qui permettent de fusionner une information double: celle provenant des mesures fournies par les capteurs et celle provenant d'un modèle d'évolution, et ceci tout en maintenant un temps de calcul compatible avec une implémentation en temps réel sur des processeurs relativement puissant (PC, Smartphone, Tablette). Notons que ces techniques de calculs sont compatibles avec des microcontrôleurs à basse consommation destinés à des appareils plus frustres encore comme les bracelets portables, les lunettes interactives, les chaussures instrumentées. La course à la baisse de consommation pousse toutefois à toujours réduire ce poste de coût, notamment afin que le coût de calcul de la fonction de calcul reste "faible", l'objectif étant "négligeable" devant la consommation des autres fonctions de l'appareil. Baisser cette empreinte calcul présente deux effets bénéfiques, tant pour la durée de fonctionnement de l'appareil entre deux recharges, que pour le coût et la masse, vu que la batterie est moins importante, moins lourde et moins coûteuse, et que le processeur est plus petit donc moins coûteux.

Les méthodes connues mettant en oeuvre un observateur ou calculateur reposent généralement sur l'utilisation d'un filtre de Kalman. L'avantage de cette technique est de permettre la fusion des données tout en tenant compte de la qualité de l'information apportée par les mesures fournies par les capteurs et de la qualité du modèle d'évolution des états cinétiques. Parmi les différents types de filtre de Kalman, on utilise particulièrement le filtre de Kalman étendu d'acronyme EKF pour "Extended Kalman Filter" en langue anglo-saxonne ; celui-ci est rapide et simple à mettre en oeuvre, une de ses applications à la capture de mouvement est notamment décrite dans le document "Quaternion-based extended Kalman filter for détermination orientation by inertial and magnetic sensing", SABATINI A.M., IEEE Transactions on Biomedical Engineering, 2006, 53(7).

Outre le choix du filtre, la qualité des mesures injectées dans le filtre a une grande importance, et notamment la confiance qu'on accorde à leur valeur.

En effet, comme mentionné précédemment, les mesures comportent une partie informative directement liée à l'orientation de l'objet en mouvement et une partie perturbatrice dont la nature dépend du capteur considéré. Au premier ordre, il s'agit des accélérations propres pour les mesures fournies par les accéléromètres, et des perturbations magnétiques pour les mesures délivrées par le magnétomètre. Il serait possible d'incorporer les défauts des capteurs, notamment les bruits et les biais pour les gyromètres et les magnétomètres.

Il existe plusieurs méthodes pour traiter les perturbations. Il est notamment possible de ne pas tenir compte des mesures perturbées, mais dans le cas où les mesures de plusieurs capteurs présentent simultanément une perturbation, et que même si ces perturbations sont correctement reportées à l'observateur, sous forme d'une "grande" valeur d'incertitude associée à la mesure, l'observateur n'a plus assez d'informations pour proposer une estimation correcte de l'orientation. Il est également possible d'inclure une représentation des perturbations dans le vecteur et le modèle d'état du filtre de Kalman pour les estimer conjointement avec les paramètres de l'attitude du solide. Toutefois, l'estimation conjointe des perturbations et de l'attitude s'avère délicate du fait d'un manque d'observabilité. Elle nécessite en outre le réglage d'un grand nombre de paramètres, ce qui complexifie sa mise en oeuvre.

Ces inconvénients sont traités de manière diverses par les solutions existantes. La demande de brevet international WO2010/007160, dont la demanderesse est co-titulaire, offre un procédé d'estimation de l'orientation fournissant une estimation précise de l'orientation, en présence ou non d'accélérations propres et de perturbations magnétiques. Le but énoncé précédemment est atteint par un procédé d'estimation de l'orientation sur la base de mesures, selon trois axes de l'espace, de l'accélération, du champ magnétique et de la vitesse de rotation, comprenant :

- une étape de prétraitement de ces mesures pour détecter l'existence d'une perturbation et estimer des mesures non perturbées, et
- une étape d'estimation de l'orientation sur la base des valeurs de mesures issues de l'étape de prétraitement.

Ce procédé présente cependant l'inconvénient de nécessiter l'utilisation d'une puissance de calcul importante. Il présente surtout, du point de vue métrologique, la détection de l'existence des perturbations reste fruste et la technique d'estimation des mesures non perturbées est empirique. La détection des perturbations est généralement faite sur la base de l'observation du calcul du module du champ mesuré. Dans le cas non perturbé, le champ de gravité et le champ magnétique principal présentent un module constant égal à la valeur du champ de gravité (soit 1 G, ou environ 9,81 ms$^2$) et à la valeur du module du champ magnétique principal (qui dépend de la localisation de la mesure sur la Terre, par exemple 45000nT à la position de la ville de Grenoble). Lorsque des perturbations s'y ajoutent (accélérations propres ou champ de perturbation additionnel au champ terrestre), le module n'est plus constant. Cette technique permet de détecter les perturbations et d'ainsi gérer la confiance que l'on accorde aux données accélérométriques et magnétométriques. Cette technique est applicable à des objets en mouvement, car le module de la mesure ne dépend pas de l'orientation du capteur, et on peut donc le calculer à chaque instant.

C'est une technique cependant frustre en comparaison de l'invention proposée car elle ne repose que sur un modèle de comportement de la norme des signaux.

Dans la course au ratio coût/performance, le document FR 2976353 propose une autre démarche, qui propose de s'appuyer sur les méthodes de calcul de type QUEST ou TRIAD pour fournir l'attitude, non plus en se fondant sur des techniques d'optimisation, mais en dé-bruitant au préalable, selon des méthodes proches de la technique précédente les mesures des champs vectoriels, qui sont alors fournies en entrée des calculs de type QUEST ou TRIAD. Le principe revient à remplacer la mesure du champ, lorsque cette dernière est entachée de perturbations importantes, par une prédiction de cette mesure de champ, cette prédiction étant réalisée à l'aide des mesures fournies par un gyromètre. Cette méthode est intéressante, elle pêche cependant sur la détection des perturbations et sur l'exploitation de cette détection pour le dé-bruitage des champs vectoriels. Le dé-bruitage est ici en effet d'une part toujours basé sur des considérations de détection des perturbations réalisées dans le référentiel des capteurs, ce qui n'exploite pas toutes les connaissances que l'on a sur les champs physiques, qui sont en effet sensiblement constants en norme, ce qui est facile à exploiter quelque soit le repère et donc valide dans le repère de l'objet, mais également pour chacune de leur composantes, ce qui n'est pas exploité par cette invention de l'art antérieur, et d'autre part, la méthode préférentiellement décrite suppose un remplacement brutal du champ mesuré lors de perturbation par sa prédiction réalisée à l'aide du gyromètre, ce qui augure de comportements non lisses.

La présente invention propose une méthode de débruitage originale qui exploite l'ensemble des connaissances, au delà de la simple détection des perturbations à base de la norme sur les champs physiques que l'on cherche à débruiter. En effet, l'invention exploite complètement les connaissances a priori des champs physiques qui sont constants en temps et en espace au niveau des composantes vectorielles individuellement et pas seulement globalement en norme.

Un but de l'invention est de proposer une méthode performante et peu consommatrice de calculs, de débruitage des champs vectoriels, en exploitant des mesures fournies par un gyromètre.

Aussi, il est proposé, selon un aspect de l'invention, un procédé de filtrage des signaux issus d'un ensemble capteur comprenant au moins un capteur de mesure d'un champ physique vectoriel sensiblement constant dans le temps et l'espace dans un repère de référence EF, ledit ensemble capteur étant lié en mouvement à un repère mobile BF, mobile dans le repère de référence, le procédé comprenant les étapes consistant à :

- appliquer une première transformation aux mesures d'un capteur de mesure de l'ensemble capteur, fournies dans le repère mobile, vers un pseudo repère de référence QEF, à l'aide d'un premier opérateur de changement de repère en rotation entre le repère mobile BF et le pseudo repère de référence QEF;
- appliquer un filtrage aux mesures ainsi transformées dans le pseudo repère de référence; et
- appliquer une deuxième transformation, inverse de ladite première transformation, aux mesures filtrées par ledit filtrage, du pseudo repère de référence QEF vers le repère mobile BF, à l'aide d'un deuxième opérateur de changement de repère en rotation entre le pseudo repère de référence et le repère mobile, inverse dudit premier opérateur.

Contrairement aux techniques connues, l'invention permet d'exploiter l'ensemble des connaissances, composante par composante ou en combinaison de ces composantes, des composantes des champs physiques sur lesquels le calcul d'orientation est fondé, et elle permet de "doser" continûment l'estimateur du champ physique, entre les deux situations extrêmes, l'une pour laquelle l'estimateur du champ physique serait égale à la mesure issue des capteurs (c'est à dire lorsqu'il n'y a pas de perturbations) et l'autre pour laquelle l'estimateur du champ physique serait basé intégralement sur la prédiction basée sur le gyromètre.

Le pseudo repère de référence, noté QEF pour "Quasi Earth Frame" en langue anglaise, est lié au repère de référence EF par une rotation constante ou lentement dérivante dans le temps. "Lentement dérivante" signifie que la bande passante de la "dérive lente" est bien plus petite que la bande passante des mouvements imprimés à l'objet.

Un tel procédé permet également de limiter fortement les calculs, ce qui constitue un avantage par rapport à l'état de l'art des méthodes fondées sur des observateurs ou filtres de Kalman qui exécutent des recherches de l'orientation via des techniques d'optimisation par approximation successives.

Un tel procédé est également complètement adapté pour prendre en compte les dérives des gyromètres embarqués. Le procédé ne considère pas le gyromètre comme un capteur parfait, mais prend en compte d'une part la dérive temporelle de l'orientation calculée sur la base des mesures d'un gyromètre, et également le fait que cette orientation n'est pas absolue.

Un tel procédé permet de découpler le filtrage des champs physiques, ce qui rend l'estimation de chaque champ indépendante de l'autre et par conséquence l'erreur d'estimation de chaque champ est également indépendante de l'autre.

Le procédé peut être mis en oeuvre avec différentes combinaisons de capteurs, c'est-à-dire A et G, M et G ou AGM. Le fait de disposer d'un seul procédé pour ces combinaisons est avantageux puisqu'un seul code de calcul est nécessaire, ce qui participe à la facilité de gestion du code.

Selon un mode de mise en oeuvre, ledit deuxième opérateur, inverse dudit premier opérateur, lorsque lesdits opérateurs sont des matrices de rotation, sont les matrices transposées l'une de l'autre. Notons que quelque soit la représentation de l'opérateur de transformation en rotation utilisée, il est aisé de déterminer l'opérateur inverse sans calculs lourds.

Il est ainsi aisé de calculer le deuxième opérateur, inverse dudit premier opérateur, à peu de coût en calcul.

Dans un mode de mise en oeuvre, ledit premier opérateur est déterminé à partir de mesures fournies par un gyromètre lié en mouvement au repère mobile.

Ainsi le calcul de l'opérateur est à bas coût calcul, à basse consommation, et est intégrable sur le produit sans autre information externe.

Par exemple, ledit premier opérateur peut être déterminé par intégration dans le temps des mesures fournies par ledit gyromètre. Selon une variante le calcul d'intégration peut être par exemple exécuté à une fréquence de calcul supérieure à la fréquence de calcul de l'application de la première transformation, du filtrage, et de la deuxième transformation.

Il est possible d'exécuter les calculs à bord d'un calculateur, séparé ou compris dans la puce System On Chip. Un accélérateur hardware peut avantageusement réaliser le calcul de l'intégration du signal du gyromètre, à haute cadence, afin de minimiser les erreurs inhérentes au calcul d'intégration et dues la taille des pas temporels.

Il est ainsi possible de réduire la quantité de calcul pour réaliser le procédé de l'invention en s'appuyant sur un accélérateur hardware spécifique sans dégrader les performances.

Par exemple, ledit premier opérateur peut également être déterminé à partir de mesures fournies par une centrale d'attitude, un capteur optique, un capteur électromagnétique, ou un capteur mécanique.

Selon un mode de mise en oeuvre, ledit filtrage appliqué est adaptatif.

Il est ainsi possible d'accélérer ou améliorer la réponse du filtre en adaptant une pondération entre un critère de rapidité et de qualité. En outre, ce type de filtrage peut être itératif, récursif, ce qui permet de réduire la mémoire nécessaire.

Dans un mode de réalisation, ledit filtrage appliqué est de type passe-haut afin d'extraire des contributions de hautes fréquences des mesures transformées dans le pseudo repère de référence.

Ainsi, le procédé de l'invention permet d'extraire les mesures non liées aux champs physiques, comme l'accélération linéaire pour l'accéléromètre ou les perturbations magnétiques pour le magnétomètre

En variante, ledit filtrage appliqué est de type passe-bas afin d'extraire des contributions de basses fréquences des mesures transformées dans le pseudo repère de référence.

Ainsi, il est possible d'extraire les mesures liées aux champs physiques et ainsi d'alimenter des procédures connues de l'homme de l'art comme celles exposées ci-dessus, avec des données débruitées des accélérations propres et/ou des perturbations magnétiques pour estimer l'orientation du mobile portant les capteurs. Le procédé décrit peut alors être suivi par une étape connue de l'homme de l'art (comme Quest ou Triad) permettant de calculer l'orientation du mobile doté de son repère BF dans le repère de référence EF, à partir des données ainsi traitées. L'étape de filtrage sera alors préférentiellement une étape de filtrage passe-bas. Les étapes de traitement sont appliquées préférentiellement à un accéléromètre pour obtenir l'inclinaison du mobile, ou à un accéléromètre et un magnétomètre pour obtenir l'orientation complète. Notons ici que le calcul d'orientation peut être indifféremment (car c'est équivalent mathématiquement) réalisé comme une étape supplémentaire à la fin des étapes de Transformation en rotation, Filtrage, Transformation en rotation inverse, ou inséré après l'opération de Filtrage et avant la Transformation en rotation inverse.

Selon un mode de mise en oeuvre, ledit ensemble capteur comprend un accéléromètre et/ou un magnétomètre.

Ainsi, après avoir appliqué le procédé de filtrage, par exemple en ne conservant que les mesures des champs physiques (donc préférentiellement avec un filtre passe-bas), on a l'information nécessaire et débruitée pour estimer l'orientation du capteur. L'application du procédé de filtrage pour déterminer les accélérations propres ou les perturbations (donc préférentiellement avec un filtre passe-haut) permet de déterminer le mouvement du capteur, par exemple par ses accélérations propres ou l'environnement magnétique du capteur.

Il est possible également de procéder simultanément aux deux types de filtrage et ainsi obtenir simultanément les mesures des champs physiques débruités d'une part et les valeurs d'accélération propre et les perturbations magnétiques d'autre part.

Il est possible d'appliquer le procédé de l'invention à la seule mesure accélérométrique ou à la mesure magnétométrique.

Dans un mode de réalisation, lesdites étapes sont réalisées simultanément sur des signaux de capteurs de l'ensemble capteur, issus d'au moins deux capteurs de mesure de deux champs physiques distincts et non colinéaires dans le repère de référence.

Cela permet d'alimenter un calcul d'orientation de l'ensemble capteur avec trois degrés de liberté (3D).

Selon un mode de mise en oeuvre, le procédé comprend en outre une étape consistant à déterminer l'orientation dudit ensemble capteur dans le repère de référence, en appliquant un calcul d'orientation (par exemple Triad ou Quest) à partir desdites mesures obtenues après leur transformation par les étapes de la première transformation, du filtrage, et de la deuxième transformation. Ledit filtrage est alors préférentiellement de nature passe-bas.

En variante, l'étape de calcul d'orientation peut être déplacée tout en obtenant le même résultat : le procédé peut donc comprendre en outre une étape supplémentaire consistant à déterminer l'orientation dudit pseudo repère de référence par rapport au repère de référence, à partir desdites mesures obtenues après leur transformation par les étapes de la première transformation et du filtrage, et ce avant d'appliquer la seconde transformation sur l'orientation ainsi déterminée par l'étape supplémentaire, pour obtenir finalement l'orientation dudit ensemble capteur dans le repère de référence.

En effet, le calcul d'orientation ainsi inséré après l'étape de filtrage permet d'estimer l'orientation du pseudo repère de référence par rapport au repère de référence. L'application de la deuxième transformation (qui permet de passer du pseudo repère de référence au repère mobile) permet donc d'obtenir l'orientation dudit ensemble capteur dans le repère de référence.

En effet, pour obtenir l'orientation dudit ensemble capteur dans le repère de référence, il est possible d'insérer l'étape de calcul de l'orientation, soit directement après la première transformation et le filtrage, la deuxième transformation étant effectuée après, soit après la première transformation, le filtrage, et la deuxième transformation. Les deux formulations sont équivalentes mathématiquement.

Il est proposé, selon un autre aspect de l'invention, un système de filtrage des signaux issus d'un ensemble capteur comprenant au moins un capteur de mesure d'un champ physique vectoriel sensiblement constant dans le temps et l'espace dans un repère de référence, ledit ensemble capteur étant lié en mouvement à un repère mobile, mobile dans le repère de référence, comprenant une unité de calcul adaptée pour :

- appliquer une première transformation aux mesures d'un capteur de mesure de l'ensemble capteur, fournies dans le repère mobile, vers un pseudo repère de référence, à l'aide d'un premier opérateur de changement de repère en rotation entre le repère mobile et le pseudo repère de référence;
- appliquer un filtrage aux mesures ainsi transformées dans le pseudo repère de référence; et
- appliquer une deuxième transformation, inverse de ladite première transformation, aux mesures filtrées par ledit filtrage, du pseudo repère de référence vers le repère mobile, à l'aide d'un deuxième opérateur de changement de repère en rotation entre le pseudo repère de référence et le repère mobile, inverse dudit premier opérateur.

Le procédé de calcul peut être implémenté à bord d'un système sur puce comprenant les capteurs et une unité de calcul, à bord d'une unité de calcul embarquée à bord du mobile ou même de manière déportée, les signaux étant transmis de l'unité mobile ou à l'unité de calcul déportée par des moyens de communications. Ces moyens de communication peuvent faire appel à des techniques radio ou plus généralement sans fil.

L'invention sera mieux comprise à l'étude de quelques modes de réalisation décrits à titre d'exemples nullement limitatifs et illustrés par les dessins annexés sur lesquels :

- la figure 1 illustre schématiquement un procédé et un système selon un aspect de l'invention;
- la figure 2 illustre schématiquement un procédé et un système de la figure 1 selon un aspect de l'invention utilisant des mesures d'un gyromètre pour déterminer le premier opérateur;
- la figure 3 illustre schématiquement un procédé et un système de la figure 2 selon un aspect de l'invention, dans lequel l'ensemble capteur comprend un accéléromètre et/ou un magnétomètre;
- les figures 4, 4a, 4b, 4c et 4d illustrent schématiquement le comportement fréquentiel des signaux aux différentes étapes selon un procédé et un système de la figure 3 selon un aspect de l'invention, avec l'évolution des comportements fréquentiels des signaux d'accélération au cours des étapes du procédé; et
- les figures 5, 5a, 5b, 5c et 5d illustrent schématiquement le comportement temporel des signaux aux différentes étapes selon un procédé et un système de la figure 3 selon un aspect de l'invention, avec l'évolution des comportements temporels des signaux d'accélération au cours des étapes du procédé ;
- les figures 6, 6a, 6b et 6d illustrent schématiquement les résultats de l'invention comparés aux résultats de l'état de l'art des figures 6', 6a, 6c et 6e. Elles mettent en évidence l'avantage de l'invention à transformer d'abord les signaux mesurés dans le repère du capteur dans un pseudo référentiel lié à la Terre puis les filtrer, au lieu de les filtrer directement dans le repère du capteur; et
- la figure 7 illustre schématiquement un système selon un aspect de l'invention.

Sur l'ensemble des figures, les éléments ayant les mêmes références sont similaires.

La méthode de filtrage proposée dans la présente demande de brevet repose sur les propriétés du champ physique mesuré. Dans sa plus grande généralité ce champ physique se présente comme un champ vectoriel variable dans l'espace et dans le temps dans un repère de référence EF pour "Earth Frame" en langue anglaise ou pseudo repère de référence QEF pour "Quasi Earth Frame" en langue anglaise. Le repère QEF est un repère lié au repère de référence par une transformation de rotation constante ou lentement variable avec le temps. Par "lentement" on désigne une rotation dont la dynamique est petite devant les mouvements "rapides" potentiellement imprimés à l'objet mobile portant les capteurs. Pour le champ magnétique terrestre ou le champ de gravité terrestre, ce repère de référence est fixe par rapport à la Terre. Pour les applications considérées, compte tenu des échelles de temps (de quelques secondes à quelques heures ou jours), des dimensions d'espace considérées (de quelques centimètres à quelques kilomètres), et compte tenu des résolutions des capteurs employés (au mieux, le millième ou dix millième du champ terrestre pour des capteurs de gamme grand public, plus généralement le centième), le champ physique présente des caractéristiques de stabilité dans ses variations spatiales ou temporelles dans un repère de référence lié à la Terre. Les variations temporelles sont généralement négligeables devant l'intensité du champ principal (qu'on définit comme la contribution constante dans le temps et dans l'espace du champ physique pour les données de temps et d'espace du scénario considéré), et les variations spatiales sont généralement de petites amplitudes devant l'intensité du champ principal.

Notons encore cependant que si une meilleure connaissance du champ physique est fournie, qu'on connaît par exemple ses variations spatiales et temporelles par exemple par un modèle mathématique, l'invention reste applicable. Il suffirait alors de comparer la valeur mesurée transformée dans le repère de référence à ce modèle mathématique, par exemple par la formation d'une différence composante à composante et d'appliquer le reste de l'invention.

Dans la suite de la description, les champs généralement considérés sont les champs de gravité ou le champ magnétique terrestre, et les capteurs correspondants sont respectivement un accéléromètre A et un magnétomètre M. De manière non limitative, l'invention peut, par exemple, également s'appliquer à tout champ physique, artificiel ou naturel, présent dans l'environnement et pour lequel on dispose d'un capteur adapté.

Pour des applications considérées, le champ magnétique constitué à la surface de la Terre a pour contributeur essentiel le champ magnétique naturel d'origine Terrestre. Il est spatialement continu et ne présente que de très lentes variations spatiales et temporelles à l'échelle des scénarii usuels.

En effet, à l'échelle des dimensions de la Terre, et en dehors de contributeurs ambiants essentiellement urbains (bâtiments, véhicules, canalisations, mobilier ...), l'évolution spatiale des trois composantes du champ magnétique naturel n'est que de quelques nano Tesla par kilomètre pour une valeur typique de norme en France de 45 000 nT.

L'évolution temporelle du champ magnétique terrestre est à l'échelle des temps géologiques. Tout au plus peut-on constater une variation lente de la direction du champ au cours des années et des siècles. Par ailleurs, la résolution des capteurs mis en oeuvre, notamment pour les applications grand public considérées, fait que le signal magnétique temporel issu de l'activité géomagnétique (d'origine solaire) qui s'additionne au champ magnétique terrestre naturel peut être négligé.

Pour de plus petites échelles et dans un environnement plus urbain ou typique de l'activité humaine, les anomalies spatiales dues à l'environnement peuvent cependant être beaucoup plus importantes. Cet environnement contribue à additionner à la contribution naturelle du champ terrestre une seconde contribution de champ, toujours majoritairement constante dans le temps, mais présentant des variations spatiales plus rapides que celles du champ magnétique terrestre. Les objets présents dans un environnement généralement corrélé à l'activité ou à la présence humaine se comportent comme autant de petits contributeurs au champ ambiant qui additionnent leurs contributions au champ naturel terrestre. Il en va ainsi des bâtiments, potentiellement constitués de matériaux ferromagnétiques, des véhicules, ... Un modèle généralement employé modélise l'intensité de leur effet en amplitude comme inversement proportionnel à la distance du point de mesure à l'objet générateur de champ, à la puissance deux ou trois. L'effet peut être important pour une mesure à proximité immédiate de l'objet, mais il décroit rapidement avec la distance et tend à s'effacer devant l'intensité du champ terrestre.

Les dispositifs à base de capteurs de champ magnétique ou magnétomètres sont généralement employés à des fins de mesure d'orientation du dispositif par rapport au repère terrestre EF. C'est ainsi le champ magnétique naturel de la Terre qui représente le signal d'intérêt. Dans les cas habituels, les déplacements sont limités aux capacités du porteur du capteur. Dans le cas d'une centrale d'attitude à bord d'un téléphone mobile, d'une tablette tactile, d'une télécommande (pour un jeu, pour le contrôle d'un média center par le mouvement), par exemple, l'ensemble capteur peut être déplacé très localement, dans une plage de quelques mètres. Les déplacements les plus importants, représentatifs de contextes de mobilité du piéton sont de l'ordre de quelques centaines de mètres à quelques kilomètres. Pour des déplacements en intérieur ou "indoor" en langue anglaise, il est à noter que le dispositif mobile est généralement porté par son utilisateur, qui se tient à distance des sources magnétiques les plus importantes (sols, murs, éléments mobiliers, ...). Pour des scénarii de jeu, ou de navigation dans des contenus informatiques 2D ou 3D, le déplacement se fait dans un volume de capture bien plus limité.

Dans des scénarii d'utilisation, on peut donc considérer que le champ magnétique ambiant présente une contribution majoritaire due au champ magnétique terrestre naturel, que l'on peut considérer comme constante dans l'espace et dans le temps, additionnée des contributions de l'environnement, qui présentent les mêmes caractéristiques.

L'invention fournit un procédé de filtrage, sans intervention de l'utilisateur, des perturbations qui s'additionnent au champ physique normal sensiblement constant dans le temps et l'espace, en utilisant conjointement aux signaux délivrés par le capteur du champ physique, une mesure de la rotation du dispositif mobile embarquant le capteur de champ physique. C'est cette mesure de rotation, que l'invention considère comme imparfaite qui permet de former une transformation en rotation du repère du capteur BF (on note également EC le repère lié à l'ensemble capteur qui est confondu ou équivalent au repère BF, car ils sont identiques ou déterminés l'un par rapport à l'autre par une rotation connue et constante) vers le pseudo repère de référence QEF. Il est évident que dans le cas où cette mesure de rotation du dispositif mobile est parfaite, on connaitrait directement la transformation en rotation entre le repère du capteur BF et le repère de référence terrestre. L'invention s'applique alors encore, et son but serait alors de séparer les perturbations du signal du aux champs physiques constant dans le temps et l'espace.

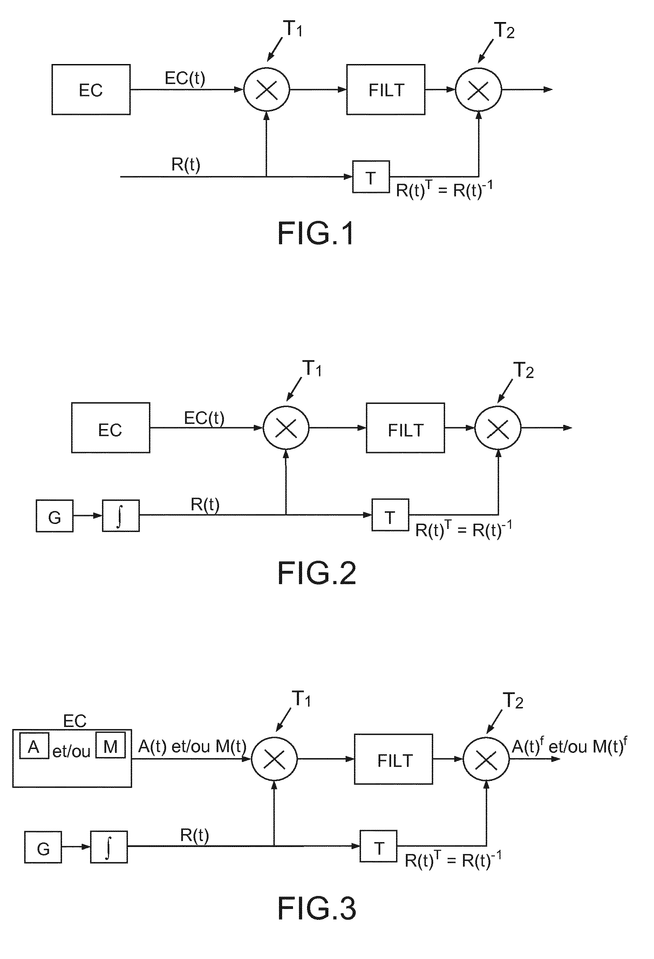

La figure 1 illustre le principe général de l'invention. La mesure temporelle EC(t) fournie par le ou les capteurs de mesure (tels les accéléromètres ou les magnétomètres) d'un ensemble capteur EC, dans le repère du mobile BF pour "Body Frame" en langue anglaise, d'un champ physique vectoriel sensiblement constant dans le temps et l'espace dans un repère de référence EF, subit une première transformation T1 par un premier opérateur R(t) de changement de repère en rotation entre le repère mobile BF et un pseudo repère de référence QEF. Le pseudo repère de référence QEF est considéré comme lié au repère de référence EF par une rotation constante ou lentement variable dans le temps. L'ensemble capteur EC est lié fixement en mouvement à un repère mobile BF, mobile dans le repère de référence EF et dans le pseudo repère de référence QEF. On applique ensuite un filtrage FILT aux mesures ainsi transformées dans le pseudo repère de référence QEF, puis on applique une deuxième transformation T2, inverse de ladite première transformation, aux mesures filtrées par ledit filtrage FILT, du repère de référence QEF vers le repère mobile BF, à l'aide d'un deuxième opérateur $R^{-1}(t)$ de changement de repère en rotation entre le pseudo repère de référence QEF et le repère mobile BF, inverse dudit premier opérateur R(t). Ces étapes permettent d'isoler, dans les mesures ainsi transformées, et selon le choix du filtre (avantageusement choisi entre un passe-bas ou un passe-haut), les valeurs liées au champ physique vectoriel sensiblement constant dans le temps et l'espace dans un repère de référence EF, ou au

EP 3 211 370 A1

contraire, les perturbations qui s'y additionnent. C'est un séparateur optimal de ces contributions.

Le deuxième opérateur $R^{-1}(t)$, inverse dudit premier opérateur $R(t)$, lorsque lesdits opérateurs sont des matrices de rotation, sont les matrices transposées $R(t)^T$ l'une de l'autre. Cela permet un calcul facile par transposition T de matrice.

De manière avantageuse, comme représenté sur la figure 2, il est possible d'exploiter des données fournies par un gyromètre G compris dans l'ensemble capteur pour déterminer le premier opérateur $R(t)$ de transformation en rotation entre le repère BF du mobile portant les capteurs, et le repère QEF, par exemple par intégration temporelle des mesures fournies par le gyromètre G. Ce calcul peut par exemple, être réalisé à une fréquence de calcul supérieure à la fréquence de calcul de l'application de la première transformation T1, du filtrage FILT, et de la deuxième transformation T2. Il peut être effectué par une unité de calcul spécialisée et efficace pour réaliser le calcul à plus haute fréquence que les autres étapes de l'invention afin de réduire l'erreur due à la taille des pas temporels.

La présente invention est donc particulièrement intéressante dans le cas d'un dispositif mobile dans le repère terrestre, donc aussi dans le pseudo repère de référence QEF, par exemple, embarquant une centrale d'attitude comportant au moins un Gyromètre et un capteur du champ physique constant dans le temps et l'espace dans le repère de référence EF. Ainsi, on peut calculer, à l'aide du Gyromètre embarqué dans l'ensemble capteur, la valeur du premier opérateur de la transformation T1, et l'ensemble capteur se suffit ainsi à lui-même et la valeur de l'opérateur de la transformation T1 ne dépend pas d'un capteur ou d'un ensemble supplémentaire. Avec le Gyromètre, le pseudo repère de référence QEF est donc lié au repère terrestre EF par une transformation comportant une part de rotation constante inconnue, et une part de rotation lentement dérivante dans le temps. Ceci est dû aux propriétés du gyromètre qui délivre des vitesses de rotation, et donc la rotation du repère (EC ou BF) portant le gyromètre à partir des signaux du gyromètre) par rapport au repère de référence terrestre EF n'est connue qu'à une constante près, et par ailleurs, comme le gyromètre présente un biais de mesure non nul, la rotation du repère portant le gyromètre calculée à partir des signaux du gyromètre présente alors également une contribution de dérive lente, dépendant de l'amplitude du biais des mesures.

En variante, le premier opérateur $R(t)$ peut être déterminé à partir de mesures fournies par une autre centrale d'attitude, un capteur optique, un capteur électromagnétique, ou un capteur mécanique.

Dans la suite de la description, on décrit plus en détails l'utilisation d'un gyromètre, mais de manière non limitative.

L'invention dite du "Filtrage Sphérique" est fondée sur la constatation suivante : le gyromètre G délivre des signaux représentatifs des vitesses de rotation instantanées du dispositif mobile, selon les axes du repère BF lié au dispositif mobile. Les vitesses instantanées délivrées par le gyromètre sont délivrées dans le repère mobile BF.

A partir de ces signaux gyrométriques, selon des méthodes connues de l'homme de l'art, il est possible de calculer une orientation ou attitude du dispositif mobile dans un pseudo repère de référence QEF lié au repère terrestre EF (assimilé à un repère inertiel) par une rotation constante ou lentement dérivante dans le temps..

Le repère de référence EF est ici supposé galiléen, sauf si les effets de la rotation de la Terre ne sont pas négligeables par rapport à la performance du gyromètre. Tant qu'aucun effet (accélération), conséquence d'une rotation, ne peut être mesuré, un référentiel peut être considéré comme inertiel. Aussi la définition d'un repère inertiel dépend de la précision des mesures réalisées. Dans la présente invention, on considère que le repère terrestre (défini usuellement par un vecteur vertical, et un nord horizontal) est Galiléen.

En effet, tout comme il est possible de calculer une donnée de position (donc selon des coordonnées de translation) d'un mobile à partir d'un signal de vitesse en translation de ce mobile, il est possible de calculer une orientation ou attitude d'un dispositif mobile à partir de ses vitesses de rotation. Les méthodes classiques connues sont dites "intégratives". Elles calculent une somme intégrale des petits changements en orientation au cours du temps. Les petits changements sont directement calculés à partir des vitesses de rotation instantanées. Dans un mode particulier, le procédé de calcul intégral peut être implémenté à plus haute cadence que la cadence d'échantillonnage des signaux accélérométriques ou magnétométriques, avantageusement à bord d'un circuit spécialisé pour ce type de calcul. Cela permet de réduire les erreurs dues aux grands pas d'échantillonnage temporel.

Cependant, à partir d'un gyromètre, d'une part, il est normalement nécessaire de connaître une orientation ou attitude initiale du dispositif mobile dans le repère terrestre (ou connaître cette orientation à un instant donné), puisque le gyromètre délivre uniquement des vitesses de rotation et puisque les méthodes de calcul de l'orientation sont intégratives - donc ne donnent pas accès à une orientation absolue dans le repère Terrestre -, et d'autre part, comme tout capteur, les gyromètres présentent un biais, que l'on considère en plus comme pouvant lentement dériver dans le temps, aussi, l'orientation ainsi calculée présente elle-même une dérive temporelle lente par rapport à la réalité d'orientation du dispositif mobile. Pour illustrer ces deux effets dans un cas simple, l'orientation d'un dispositif immobile dans le repère terrestre EF, ainsi estimée à partir de vitesses de rotation est inconnue à un opérateur de rotation constant prés, et elle dérivera lentement dans le temps. Le gyromètre ne donne donc accès qu'à la valeur de l'orientation du dispositif mobile dans un pseudo repère de référence QEF. Pour un gyromètre parfait, la dérive de l'estimateur est nulle, alors que l'opérateur de rotation constant reste inconnu. Le repère QEF est alors lié fixement au repère de référence terrestre EF par un opérateur de rotation constant mais inconnu. Dans le cas réel d'un capteur avec biais, le repère QEF est alors lié au repère de référence terrestre EF par un opérateur de rotation lentement dérivant dans le temps.

12

En conclusion, les signaux issus d'un gyromètre G permettent donc de calculer, à chaque instant, à une rotation constante inconnue près et à une dérive temporelle près, fonction du biais du gyromètre, l'orientation du mobile dans le repère terrestre. La méthode de filtrage sphérique proposée ici prend directement en compte ces propriétés. Elle ne suppose donc nullement que le Gyromètre est parfait, ce qui est un avantage considérable de cette invention, puisque les défauts inhérents au gyromètre sont pris en compte.

Le procédé de "filtrage sphérique" comme présentement baptisé, est particulièrement avantageux pour les dispositifs embarquant un gyromètre. Il est cependant possible d'exploiter dans le procédé du filtrage sphérique toute donnée de mesure d'attitude du dispositif mobile ou toute donnée de vitesses de rotation du dispositif mobile, en lieu et place de celle calculée sur la base des signaux d'un gyromètre.

Nous proposons ici une description des étapes du filtrage sphérique dans le cas du filtrage d'une mesure de champ physique réalisée par un capteur adapté à mesurer ce champ physique.

La présente invention est particulièrement intéressante pour un ensemble capteur EC embarquant un accéléromètre A et/ou un magnétomètre M. Les capteurs sont mécaniquement solidaires du dispositif mobile. On suppose qu'on dispose à chaque instant d'une donnée d'orientation du dispositif mobile dans le pseudo repère de référence QEF , donc connu à une orientation constante inconnue près, et présentant éventuellement un comportement dérivant lentement dans le temps par rapport au repère de référence EF. Nous avons vu qu'il est possible de trouver cette donnée d'orientation du dispositif mobile dans le pseudo repère de référence QEF, par exemple grâce à un gyromètre.

Avec la présente invention, les données traitées par le procédé décrit permettent, avec l'accéléromètre A de séparer la contribution gravitationnelle de la contribution d'accélération propre. De même pour le magnétomètre, avec la présente invention, le procédé décrit permet de séparer les perturbations magnétiques des contributions du champ principal. A partir de la contribution gravitationnelle ainsi obtenue, il est possible de fournir les angles d'inclinaison du dispositif dans le repère terrestre EF. Avec les deux capteurs il est alors possible de fournir l'orientation complète du dispositif dans le repère terrestre EF.

A partir de l'accélération propre obtenue selon le procédé, il est possible d'estimer des paramètres liés à la trajectoire du dispositif dans le repère terrestre. Il est donc avantageux de pouvoir séparer ces deux contributions d'accélération gravitationnelle et d'accélération propre. Concernant le capteur magnétique M, il s'agit de réduire l'effet des perturbations magnétiques et ainsi pouvoir fournir le cap du dispositif par rapport au champ principal, en évitant de suivre toutes les perturbations magnétiques.

Le capteur accéléromètre mesure ici la somme des contributions de champ gravitationnel et la contribution d'accélération propre. On considérera que la géométrie du dispositif mobile et des capteurs est connue et qu'il est ainsi possible d'exprimer tous les signaux générés par les capteurs dans le même repère lié au dispositif mobile BF ou EC. On considère que les valeurs mesurées formant les signaux accélérométriques sont corrigées des biais (ou offsets) et des gains (ou sensibilité).

Le repère associé à la Terre est noté EF comme "Earth Frame" en langue anglaise, le pseudo repère de référence est noté QEF comme "Quasi Earth Frame" en langue anglaise. Le repère associé au dispositif mobile, i.e. associé au capteur, est noté BF pour "Body Frame" en langue anglaise. L'opérateur de transformation qui permet de transformer des vecteurs du repère BF au repère QEF en rotation est notée R(t). On peut utiliser les différents formalismes bien connus de l'homme de l'art pour représenter et mettre en oeuvre cet opérateur de transformation (quaternions, matrices de rotation, angles d'Euler ou de Cardan....). Cette rotation varie au cours du temps, selon les mouvements de l'objet mobile dans le pseudo repère de référence QEF. Si $v_{QEF}$ désigne un vecteur exprimé dans le repère QEF et $v_{BF}$ le même vecteur exprimé dans le repère BF, on a alors la relation suivante liant les trois termes ainsi définis :

$v_{QEF} = R(t)*\ v_{BF}$. Cette transformation est valable pour tout vecteur dont on souhaite exprimer les coordonnées dans le repère QEF, à partir de son expression dans le repère BF.

On modélise le signal délivré par l'accéléromètre :

$$A_{BF}(t) = R(t)^{-1} *\ g_{QEF} + ap_{BF}(t) + aw_{BF}(t),$$

où :

$A_{BF}(t)$ représente la sortie (à trois composantes) de l'accéléromètre A (dans le repère capteur BF),

$g_{QEF}$ représente la contribution de champ gravitationnel dans le repère QEF. C'est un vecteur que l'on modélise classiquement comme constant dans le repère terrestre EF, le champ de gravité terrestre étant généralement relativement bien approximé par un champ uniforme à la surface de la Terre et dirigé vers le centre de la Terre. Il est formé de trois composantes. Dans le cas classique du choix d'un repère de référence dont l'axe z est vertical,

$g_{EF}$ = [0,0,g], g étant l'amplitude du champ de gravité terrestre. Il est assez courant de travailler en unité de g, alors $g_{EF}$ = [0,0,1] constitue une bonne approximation avec g= 9,81 m/s$^2$ à la surface de la Terre. Dans le repère QEF qui dérive lentement par rapport au repère EF, $g_{QEF}$ n'est plus constant, mais dérive lentement.

$R(t)^{-1}$ représente l'opérateur de transformation en rotation qui permet de passer du repère QEF au repère BF. Il est naturellement variable dans le temps, le dispositif mobile étant réputé mobile. Notons qu'usuellement, on présente le modèle du signal délivré par l'accéléromètre en fonction de $g_{EF}$, vecteur gravité dans le repère terrestre, et non $g_{QEF}$. Dans la présente invention, on s'appuie sur le fait que l'opérateur R entre les repères EF et QEF n'est généralement pas connu. L'invention prend donc directement ce cas majoritaire en compte. Dans un cas pratique majoritaire R est déterminé par exemple à partir du gyromètre G comme sur la figure 2, ou il est disponible à partir d'une autre source comme sur la figure 1.

$R(t)^{-1} * g_{QEF}$ représente donc la contribution d'accélération mesurée par l'accéléromètre A, dans le repère BF du dispositif mobile, due à la gravité. C'est également un vecteur à trois composantes. Cette contribution est naturellement variable dans le temps en fonction des orientations que prend le dispositif mobile dans le repère terrestre. Pour un mouvement de pure rotation du dispositif mobile à une fréquence donnée, on observe ainsi une contribution de signal à cette même fréquence dans la mesure de l'accéléromètre A, due au champ de gravité de la Terre.

$ap_{BF}(t)$ représente l'accélération propre du mobile, dans le repère mobile. En représentation fréquentielle, ce signal comporte donc une contribution de même répartition fréquentielle que celle des déplacements en translation que subit le dispositif mobile. Par ailleurs, si le capteur n'est pas positionné sur le centre de rotation instantané du dispositif mobile, une contribution d'accélération propre due à la vitesse de rotation et à la distance au centre de rotation est créée et s'additionne à la contribution due aux mouvements de translation. Le signal comporte donc une contribution de même répartition fréquentielle que celle des déplacements en rotation que subit le dispositif mobile. Cela a été vu précédemment.

$aw_{bf}(t)$ représente le bruit du capteur dans le repère mobile BF.

R(t) et sa transformation inverse $R(t)^{-1}$ sont déduits l'un de l'autre simplement, par ce que ce sont des opérateurs de transformation en rotation. Par exemple lorsque R est représenté par une matrice de rotation, $R(t)^{-1}$ est obtenu par la transposée de R soit $R(t)^t$. L'opération de calcul de l'inverse est représentée sur les figures par une fonction transposition.

Comme représenté sur la figure 1, le filtrage sphérique consiste à appliquer l'opérateur de transformation en rotation fourni ou estimé R(t) sur le signal de l'accéléromètre $A_{BF}(t)$ par exemple (cas de la figure 3), faire un filtrage passe-bas des composantes ainsi obtenues et appliquer l'opérateur de transformation en rotation estimé inverse $R(t)^{-1}$ = $R(t)^t$. Selon les notations de la figure 1, les signaux issus de l'ensemble capteur sont noté EC(t). EC(t) peut comprendre $A_{BF}(t)$ pour l'accéléromètre et/ou $M_{BF}(t)$ (notés, par souci de simplification, A(t) et M(t) sur la figure 3) pour le magnétomètre, selon les notations propres au magnétomètre qui seront introduites plus bas.

La Figure 2 illustre le procédé lorsque l'on dispose d'un gyromètre G pour estimer R(t). Le procédé de l'invention s'applique en effet parfaitement pour un estimateur de l'opérateur de rotation connu à une matrice constante de rotation près et présentant une dérive lente dans le temps, ce qui est particulièrement avantageux pour des dispositifs à gyromètre, qui sont connus pour présenter des dérives lentes et qui permettent de calculer un estimateur à une matrice de rotation constante inconnue près. L'invention ne nécessite pas que l'opérateur de transformation en rotation soit un parfait estimateur du changement de repère entre le mobile et un repère lié à la Terre.

La figure 3 illustre schématiquement un procédé et un système de la figure 2 selon un aspect de l'invention, dans lequel l'ensemble capteur comprend un accéléromètre A et/ou un magnétomètre M. EC représente l'ensemble capteur et génère les mesures issues de capteurs tels l'accéléromètre et/ou le magnétomètre. Par souci de simplification on note A(t) les mesures issues de l'accéléromètre, et M(t) les mesures issues du magnétomètre, et les résultats du procédé de filtrage de l'invention sont notées $A^f(t)$ et $M^f(t)$.

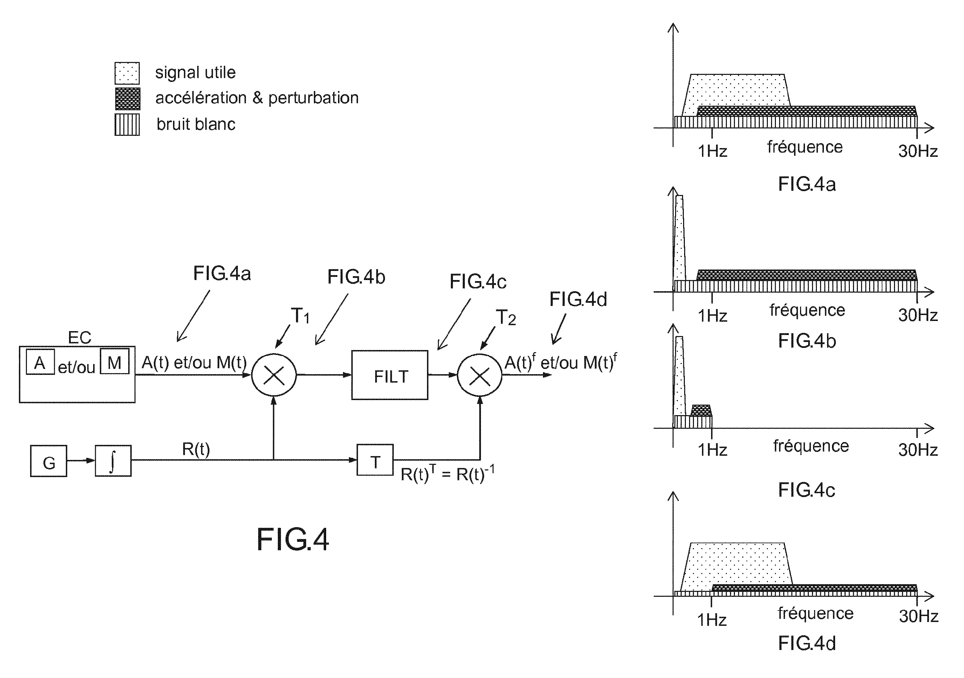

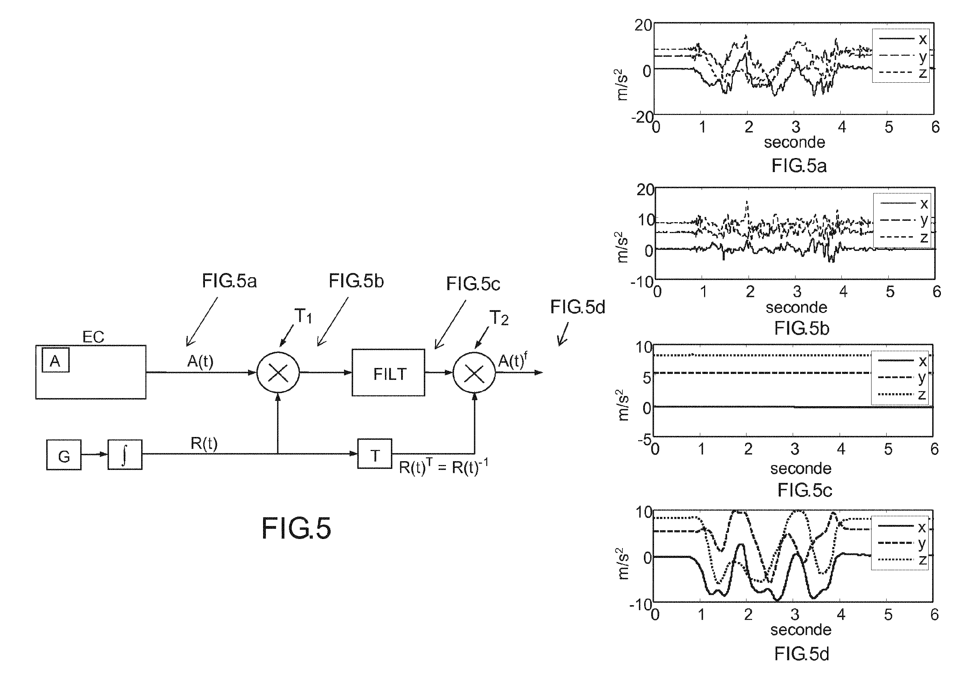

Le filtrage FILT peut être un passe-haut ou un passe-bas selon la contribution de mesure que l'on cherche à isoler (c'est-à-dire soit le champ physique constant en temps et espace dans le repère RF ou l'accélération propre / la perturbation magnétique). Par exemple également, le filtrage FILT appliqué dans le repère QEF après transformation, peut être adaptatif, par exemple en utilisant un filtrage linéaire à gain variable ou un filtrage linéaire de type Kalman. Les figures 1, 2, 3 présentent des mises en pratique avantageuses du filtrage proposé par l'invention. On comprend mieux pourquoi ces étapes sont avantageuses et comment elles fonctionnent à la lueur des figures 4 et 5.

Les figures 4, 4a, 4b, 4c et 4d et les figures 5, 5a, 5b, 5c et 5d représentent, respectivement dans l'espace des fréquences pour les figures 4, 4a, 4b, 4c et 4d et dans l'espace des temps pour les figures 5, 5a, 5b, 5c et 5d, l'évolution du comportement des signaux au fur et à mesure des étapes du procédé. Pour fixer les idées sur un exemple concret, la figure 5 présente le comportement des signaux à différentes étapes du procédé de l'invention pour une tranche temporelle d'un signal d'accélération A(t). Le comportement des signaux est représenté à quatre étapes différentes du procédé de l'invention selon les notations des figures 4 et 5 pour l'exemple de la figure 3, avant, au cours de deux étapes intermédiaires et après l'application du procédé de filtrage sphérique.

Sur la figure 4a, est représenté schématiquement, de manière fréquentielle, le signal mesuré par l'accéléromètre

$A_{BF}(t)$ (ou noté A(t) par souci de simplification sur les figures) ou du magnétomètre $M_{BF}(t)$ (ou noté M(t) par souci de simplification sur les figures), dans le repère BF du dispositif mobile. La figure 5a présente une réalisation temporelle de A(t) (ou aussi $A_{BF}(t)$) à la même étape. Le signal comprend une contribution due à la gravitation dit "signal utile", en légende des figures 4, 4a, 4b, 4c et 4d, étalée selon le comportement spectral des mouvements de rotation imprimés au dispositif mobile, i.e. à l'ensemble capteur EC, soit ici sur une bande, donnée à titre d'exemple de 30Hz. Ce signal de gravitation constitue, dans cet exemple, la partie utile de la mesure issue du capteur. Il fournit les composantes du champ de gravité terrestre selon les axes de mesure du capteur dans le repère du capteur. C'est cette information dite "utile" (du moins pour une application par exemple d'estimation de l'orientation du mobile en mouvement), à laquelle vont s'additionner les "bruits", notamment le signal d'accélération propre au mobile. La contribution gravitationnelle sert à calculer l'orientation du capteur par rapport au vecteur gravité terrestre, que l'on sait orienté verticalement par rapport au repère Terrestre. De même pour le magnétomètre, le signal utile est dû au champ magnétique terrestre. Le signal mesuré par le capteur comprend par ailleurs, une seconde contribution notée "accélération" selon la légende des figures 4, 4a, 4b, 4c et 4d pour le capteur accélérométrique, et "perturbation" pour le capteur magnétométrique selon la légende des figures 4, 4a, 4b, 4c et 4d, et étalée sur une bande dépendante des mouvements de translation et de rotation. Il est à noter que, sauf cas exceptionnels de situations dans lesquelles l'accélération propre de translation serait constante en temps et direction et où l'accélération propre due aux mouvements de rotation serait constante en temps et en direction, cette contribution d'accélération propre ne présente pas de contribution continue. C'est une hypothèse raisonnable dans la mesure où dans beaucoup de cas, le dispositif mobile est déplacé dans un volume de mesure fini, comme par exemple pour un périphérique de jeu, un téléphone mobile, un accessoire de sport, ... Enfin on représente la contribution de bruit du capteur, ici modélisée comme un bruit blanc et notée "bruit blanc" et qui s'étale, selon la représentation donnée ici sur toute la bande de fréquence d'acquisition du capteur Le bruit pourrait être coloré et l'invention s'appliquerait de la même manière. Le choix de représentation d'un bruit blanc simplifie les représentations, mais le procédé s'applique également pour du bruit coloré. Ces trois contributions schématisées sur des figures 4, 4a, 4b, 4c et 4d et représentées au cours des étapes du procédé s'additionnent pour former la mesure du capteur. La figure 5a représente une réalisation temporelle de mesure du capteur selon les trois axes de mesure où l'ensemble de ces trois contributions (gravitation, bruit capteur et accélération propre) s'additionnent. Sur la tranche temporelle d'accélération de la figure 5, l'ensemble capteur est ici soumis à des mouvements de translation et rotations dans le repère de la Terre. L'ensemble capteur est d'abord posé, immobile, puis soumis à ces mouvements, comprenant de l'accélération propre, puis reposé.

Il est classiquement proposé, dans l'art antérieur, une méthode de filtrage passe-bas du signal issu de l'accéléromètre, afin de séparer la contribution gravitationnelle de la contribution d'accélération propre. Ce procédé est cependant voué à l'échec, dans la mesure où, s'il est raisonnable de considérer que l'accélération propre ne comporte pas de contribution fréquentielle nulle, il est faux de considérer que la contribution due au champ de gravitation ("signal utile" sur des figures 4, 4a, 4b, 4c et 4d) est, concentrée vers les basses fréquences. En effet, il a été montré précédemment que la contribution du champ de gravité au signal capteur présente un comportement fréquentiel directement lié au spectre des mouvements de rotation imposés au dispositif mobile, i.e. à l'ensemble capteur EC. On comprend aisément ainsi que pour des applications de jeu ou de sport, ou pour des mouvements d'un téléphone mobile, les mouvements de rotation imposent un spectre fréquentiel certainement bien plus large que concentré uniquement dans les basses fréquences. Ainsi, une opération de filtrage passe-bas, par exemple avec une fréquence de coupure à 1 Hz appliquée directement au signal du capteur coupe une partie du signal de gravitation et ne réalise ainsi pas une bonne séparation des contributions de la gravité et de l'accélération propre. Par ailleurs, il serait possible de choisir une fréquence de coupure plus haute, qui comprend l'ensemble du spectre fréquentiel du mouvement, mais alors, on comprend qu'il reste une forte contribution d'accélération propre dans le signal ainsi filtré. Ici encore, une simple opération de filtrage passe-bas n'est pas efficace pour séparer la contribution de la gravité de la contribution de l'accélération propre car ces contributions fréquentielles ne sont pas séparables en fréquences lorsque les mesures sont effectuées dans le repère du capteur

Le procédé de filtrage sphérique proposé dans la présente invention comprend ainsi une première transformation T1 (figures 4 et 5), par un opérateur de transformation en rotation du repère mobile BF vers le pseudo repère de référence QEF, des signaux issus de l'accéléromètre, A(t) et/ou du magnétomètre, M(t). Le comportement fréquentiel des signaux ainsi transformés est représenté en figure 4b. Le comportement temporel de la réalisation réalisation temporelle de l'accéléromètre est représenté en figure 5b. Dans la mesure où l'opérateur R(t) de transformation en rotation T1 défini le passage du repère BF vers le repère QEF, on considère raisonnablement qu'il dérive lentement dans le temps, on peut montrer aisément que la contribution de la contribution due à la gravité (ou due au champ magnétique terrestre) se comporte alors comme un signal présentant une contribution fréquentielle concentrée autour de la fréquence nulle et étalée en fréquences selon la vitesse de dérive de R(t). La figure 4b montre l'effet, en représentation fréquentielle, de l'opérateur T1 sur le signal utile. La puissance est concentrée autour de 0, avec un étalement d'autant plus important que la dérive de l'opérateur T1 est grande. Le fait que l'opérateur R(t) ne soit connu qu'à une rotation constante près par rapport au repère de référence Terrestre, ne modifie pas le comportement fréquentiel de la contribution du champ de gravité. Pour un estimateur de l'opérateur de transformation en rotation R(t) issu d'un gyromètre parfait, alors la contribution fréquentielle de la contribution du champ gravitationnel (ou du champ magnétique de la Terre) serait identiquement confondue en 0. Pour un estimateur dérivant lentement dans le temps, cette contribution s'étale sur une petite plage de fréquences, identique à celle de la dérive de l'opérateur de transformation en rotation R(t). L'opération de transformation en rotation R concentre donc vers les basses fréquences la contribution du champ de gravité puisque le repère QEF dérive lentement par rapport au repère EF, et que dans ce dernier la contribution de gravité est parfaitement constante. Les autres contributions (accélération propre ou perturbations magnétiques et bruits endogène) ne présentent pas le même comportement et restent étalées sur l'ensemble du spectre fréquentiel. On représente en figure 4b, l'effet de la transformation T1 sur les trois spectres du signal "utile", du signal "accélération et perturbation" et du bruit blanc du capteur. La figure 5b représente une réalisation temporelle du signal d'accéléromètre, après transformation par T1. On constate une contribution continue ou faiblement dérivante (pour chaque axe de mesure), représentatives de la valeur du champ de gravité, à laquelle s'additionne l'accélération propre qui apparait sous forme des variations rapides autour de la contribution continue (pour chaque axe de mesure). Visuellement, on sépare donc la gravité, des autres contributions du signal.

Sur la figure 4c, le spectre schématise le comportement des différentes contributions du signal de l'accéléromètre A (et/ou du magnétomètre) après une opération de filtrage passe-bas, ici schématiquement paramétré avec une fréquence de coupure de 1 Hz, que l'on choisit par exemple mais notamment, en fonction du comportement de dérive de l'estimateur de transformation en rotation. Ce filtre FILT peut être de paramètres déterminés à l'avance, mais il convient de noter qu'il a aussi naturellement vocation, en l'espèce, à être un filtre adaptatif, dont les paramètres de filtrage sont essentiellement la fréquence de coupure. On pourra ainsi constamment adapter le compromis entre vitesse de réaction et qualité en réalisant un filtre adaptatif. Dans la représentation temporelle de la figure 5c, l'effet du filtrage passe bas est apparent : les hautes fréquences essentiellement dues aux accélérations propres et au bruit endogène du capteur sont fortement atténuées. Seules subsistent les contributions basses fréquences qui sont essentiellement dues au signal de gravité.

Par exemple, la valeur de la fréquence de coupure (prise ici égale à 1 Hz) dépend de la qualité du biais du gyromètre G, si le dispositif comporte un gyromètre utilisé pour estimer l'opérateur R(t) de transformation en rotation. L'effet du filtre passe-bas est de conserver l'intégralité de la contribution du signal d'accélération dû à la gravité (et/ou du champ magnétique terrestre), et de réduire considérablement (ici donc dans un facteur de 1 à 30) la contribution du bruit blanc et celle de l'accélération propre (et/ou des perturbations magnétiques). Cette étape clé réduit donc considérablement les contributions qui s'additionnent au champ de gravité terrestre (et/ou au champ magnétique terrestre). On dispose alors de l'estimation optimale selon notre procédé de filtrage sphérique de la contribution de gravité, dans le pseudo repère terrestre QEF.

Pour obtenir les signaux ainsi filtrés après ces deux étapes clés à nouveau dans le repère mobile BF, on peut alors procéder à une deuxième transformation T2 en rotation inverse R(t)$^{-1}$ de la première transformation T1. La figure 4d représente schématiquement, dans le domaine fréquentiel, les différentes contributions en sortie du filtrage sphérique, c'est-à-dire après l'application de la rotation T2. On constate que la contribution majoritaire est celle de la contribution d'accélération gravitationnelle (et/ou du champ magnétique terrestre), qui n'a pas été distordue ou atténuée par les étapes du procédé, alors que les autres contributions ont été considérablement réduites dans un facteur dépendant de la fréquence de coupure du filtre (ici passe-bas) utilisé dans le procédé de filtrage sphérique, cette fréquence de coupure étant elle-même dépendante de la qualité de dérive de l'estimateur de l'opérateur de transformation en rotation du repère mobile BF au pseudo repère de référence QEF. La figure 5d représente une tranche temporelle à la même étape de sortie du filtre de l'invention. La contribution essentiellement restante est celle de la gravité, les autres contributions d'accélération propre et de bruit endogène au capteur sont considérablement réduites.

Le lecteur remarquera facilement sur la base de la figure 4b, comme cela a été mentionné précédemment, qu'il est très simple de remplacer le filtre passe bas décrit ci-dessus par un filtre passe haut qui éliminerait complètement le signal de gravitation (signal utile) ou le champ magnétique terrestre. Après ce filtrage, on dispose alors de l'accélération propre dans le repère pseudo terrestre. Une opération de transformation inverse permet alors de disposer de l'accélération propre dans le repère mobile, en sortie du procédé.

On peut alors constater entre la figure 4a et la figure 4d dans l'espace des fréquences et entre la figure 5a et la figure 5d dans l'espace des temps, l'apport de l'invention en terme d'augmentation du rapport signal à bruit du signal utile (ici le champ de gravité ou le champ magnétique) par rapport aux accélérations propres (et/ou perturbations magnétiques), et au bruit présent dans la bande.

Les première et deuxième transformations T1 et T2 consistent simplement à transformer les mesures fournies par l'accéléromètre A et le magnétomètre M dans un repère arbitraire dit pseudo repère de référence QEF, par exemple calculé à partir des mesures du gyromètre G. Ce repère a une orientation constante et lentement dérivante inconnue par rapport au repère de référence EF de la Terre, ce dont l'invention proposée s'affranchit, ce qui représente un avantage important. Ce repère présente la propriété de dériver lentement par rapport au repère de la Terre à cause de la dérive du biais du gyromètre G. Ainsi, les données transformées dans le repère QEF (qui dérive lentement par rapport à un repère de référence EF) présentent les caractéristiques fréquentielles suivantes : pour le magnétomètre M comme pour l'accéléromètre A, la bonne contribution de champ terrestre (gravitationnel respectivement magnétique) est repoussée en bas du spectre fréquentiel. Pour une dérive de biais nulle, qui est hypothétique mais qui permet de comprendre l'invention dans un cas limite, elle serait réduite à une contribution continue. La contribution d'accélération propre est, elle, toujours présente sur l'ensemble du spectre. Sans autre hypothèses plus précises, on considère que les contributions de bruit magnétique dues à des anomalies spatiales de champ ou bruit de mauvaise calibration sont présentes sur l'ensemble du spectre. La transformation proposée présente donc la bonne propriété de séparer fréquentiellement, pour les mesures de l'accéléromètre, le champ de gravité et l'accélération propre ou le bruit endogène du capteur. Dans ce repère QEF dérivant lentement par rapport au repère EF, un filtrage passe-bas sur les signaux de l'accéléromètre A transformés et les signaux du magnétomètre M transformés permet alors de conserver la bande basse dans laquelle la contribution de champ gravitationnel et de champ magnétique terrestres est située, et ainsi retirer au mieux les contributions de bruit. Les opérations sont simples et peuvent être réalisées sous fortes contraintes d'empreinte de calcul (mémoire et calcul).

Par souci de complétude, on décrit maintenant le comportement des mesures issues d'un magnétomètre. Le champ naturel terrestre ou champ de Gauss ou champ principal comprend l'ensemble des effets des sources de champ magnétique d'origine profonde.

Le champ d'anomalies du champ naturel terrestre comprend l'ensemble des sources de champ non comprises dans le champ de Gauss pour former le champ ambiant en s'additionnant au champ naturel terrestre, donc en particulier l'ensemble des contributions des sources proches de la surface de la Terre. Il englobe tous les effets naturels (aimantation des roches, effet magnétiques des évènements géologiques) et non naturels (Voitures, Bâtiments, ...).

Le champ ambiant est la somme du champ naturel terrestre et du champ d'anomalies (ou champ de perturbations). Il est celui qu'on peut observer. Le champ principal est, pour un scénario donné, et donc une échelle d'espace et de temps donnée, la contribution du champ ambiant qui est essentiellement constante dans l'espace et dans le temps.

Le champ de perturbation est la contribution qui s'additionne au champ principal pour donner le champ ambiant. Le champ de perturbation est généralement petit devant le champ principal.

On note $h_{QEF}(t)$ le champ physique principal à la position du capteur magnétique du dispositif mobile ou en d'autres termes de l'ensemble capteur EC, dans le pseudo repère de référence QEF. Par définition, le champ principal est sensiblement invariant dans l'espace et dans le temps pour les échelles du scénario considéré dans le repère EF. Le repère QEF dérive lentement dans le repère EF. La conséquence est que $h_{QEF}$ présente une contribution constante majoritaire qui dérive lentement dans le temps. $H_{BF}(t)$ est sa transformée dans le repère mobile BF lié au capteur. On a alors la relation suivante liant les deux vecteurs ainsi définis : $h_{QEF}(t) = R(t) * h_{BF}$.

On note $M_{BF}(t)$ le signal délivré par le magnétomètre M embarqué sur le dispositif mobile, qui mesure le champ magnétique ambiant. Un modèle général liant $M_{BF}(t)$ à $h_{QEF}(t)$ peut s'écrire : $M_{BF}(t) = R(t)^{-1} * h_{QEF} + mp_{BF}(t) + mw_{BF}(t)$.

On suppose que le capteur délivre des mesures calibrées, débiaisées et selon des axes orthonormés du repère mobile.

Comme indiqué précédemment, $h_{QEF}(t)$ désigne le champ principal, à la position du magnétomètre, hors champ de perturbation magnétique, et exprimé dans le repère QEF. $H_{QEF}(t)$ est donc une grandeur vectorielle approximativement constante dans le temps, et on peut simplifier l'équation en notant simplement $H_{QEF}$.

$mp_{BF}(t)$ représente les perturbations dues au champ de perturbations magnétiques mesurées selon les axes du magnétomètre.

Enfin, $mw_{BF}(t)$ représente le bruit endogène au magnétomètre et au système embarquant le magnétomètre.

L'invention fournit un estimateur du champ magnétique $h_{QEF}$ ou de ses perturbations $mp_{BF}$ à partir des signaux $M_{BF}(t)$ issus du magnétomètre M, et à l'aide d'une connaissance de l'opérateur de transformation en rotation entre le repère QEF et le repère mobile BF lié au magnétomètre M. Comme pour les méthodes exposées dans l'état de l'art, les bonnes propriétés de constance du champ principal sont donc intégralement exploitées par l'invention.

Sur les figure 1, 2, 3, 4, 4a, 4b, 4c, 4d, 5, 5a, 5b, 5c et 5d sont illustrés l'étape clé du procédé de la présente invention. Elle consiste à transformer le signal vectoriel $M_{BF}(t)$ par l'opérateur $R(t)$ de changement de repère en rotation entre le repère mobile BF et le pseudo repère de référence QEF pour obtenir un signal vectoriel $M_{QEF}(t)$ exprimé dans le pseudo repère de référence QEF.

La contribution du champ principal ainsi transformée $h_{QEF}$ est alors une constante lentement dérivante car la valeur du champ principal est considérée comme constante dans le repère de référence EF et que le repère QEF dérive lentement par rapport au repère EF. La contribution de perturbation est transformée par la même opération et se présente alors comme un signal variable en temps $mp_{QEF}(t) = R(t) * mp_{BF}(t)$. Cette contribution varie si on se déplace par rapport à la source de perturbation. Si la position relative du capteur reste la même par rapport à la source de perturbation, la contribution reste constante. On identifie ainsi à cette étape, des signaux du capteur transformés dans le pseudo repère de référence QEF, que la contribution de champ principal est majoritairement une constante, qui peut s'étaler dans la partie basse du spectre en fonction de la dérive du repère QEF par rapport au repère EF, alors que les contributions de perturbation occupent une plus large partie du spectre. L'invention et ses variantes sont basées sur cette constatation et propose un moyen d'estimer soit la contribution du champ principal, par le biais d'un filtre passe bas ou la contribution de perturbation par un filtre passe haut.

L'invention proposée selon le procédé décrit ci-dessus nécessite de disposer d'une représentation de la rotation de l'objet mobile par rapport au pseudo repère de référence QEF, précédemment noté sous la forme d'un opérateur R(t). Pour ce faire, il est possible d'exploiter la rotation estimée par une centrale d'attitude employant tout ou partie des combinaisons d'accéléromètres, gyromètres et magnétomètre. Il est par ailleurs possible d'exploiter une représentation de la rotation de l'objet mobile par rapport au pseudo repère de référence QEF, estimée à partir d'un autre capteur (optique, radio, électromagnétique, mécanique). Dans les cas les plus classiques contraints à n'utiliser qu'une IMU à l'exclusion d'autres informations externes, on utilise le gyromètre pour former R(t) et appliquer le procédé aux signaux accélérométriques et/ou magnétométriques avec R(t). L'invention permet alors soit d'isoler la contribution de la gravité soit celle du champ magnétique principal. L'homme de l'art saura exploiter ces signaux ainsi isolés pour calculer une orientation de la centrale inertielle dans le repère de la terre.

Il est également très important de noter que la rotation entre repère mobile BF et le pseudo repère de référence QEF peut prendre n'importe quelle convention de repère lié à la Terre comme pseudo repère de référence QEF. Le repère QEF se doit cependant de ne dériver que "lentement" par rapport au repère EF. Pour tout repère lié fixement (ou lentement dérivant) par rapport à la Terre, même d'orientation inconnue par rapport aux axes terrestres classiquement utilisés ("North, East, Down" en langue anglaise), l'invention proposée s'applique. En effet, les propriétés des signaux transformés décrites ci-dessus du champ principal et de variation de la contribution due au biais restent entièrement valides, même si le pseudo repère de référence QEF choisi n'est pas connu par rapport au repère terrestre classique ("North, East, Down") à une rotation prés. Il n'est donc pas nécessaire stricto sensu de d'utiliser pour R un opérateur de rotation (par exemple, une matrice de rotation) par rapport à un repère d'orientation connu a priori par rapport au repère terrestre. Cette propriété importante permet d'élargir le champ des possibilités pour fournir l'opérateur R (t). Ainsi tout capteur qui fournit la vitesse de rotation de l'objet mobile dans le repère terrestre ou dans le pseudo repère de référence QEF est suffisant pour appliquer la présente invention. C'est pourquoi elle s'applique particulièrement bien pour un opérateur R calculé à partir des signaux d'un gyromètre embarqué.

Par conséquent, dans un mode avantageux de l'invention, il est possible d'exploiter la donnée d'un gyromètre G afin d'estimer un opérateur de transformation en rotation R(t) du repère mobile BF vers le pseudo repère de référence QEF (par exemple sous forme de matrice). Même si on sait qu'ainsi l'opérateur de transformation en rotation ne fournira qu'une approximation de l'orientation du mobile par rapport au repère de référence (fixe par rapport à la Terre), l'invention s'applique car elle est particulièrement adapté à ce cas. Ce type de capteur gyrométrique délivre les vitesses de rotation de l'objet mobile dans le repère de l'objet mobile BF. Il est connu de l'homme de l'art qu'à partir de ces données, il est possible d'estimer, la rotation R(t) du repère mobile par rapport à un repère QEF lié au repère terrestre par un opérateur de rotation inconnu mais ne dérivant que lentement par rapport au repère terrestre, avec recours à une fonction intégrative dans le temps des données du gyromètre G. Tout comme on peut estimer une valeur de translation à partir d'une donnée de vitesse linéaire à une constante près, il est possible et connu de l'homme de l'art d'estimer une rotation à partir de données de vitesses de rotation..

Ainsi, l'invention permet de tirer parti de façon optimale des capteurs présents classiquement dans des centrales d'attitude, comme l'est le gyromètre. L'avantage est que le procédé de l'invention tire parti de l'information apportée par ce capteur, en considérant directement dans le procédé tous ses avantages et aussi ses défauts. Dans les présentations de l'invention précédentes, il est donc possible de remplacer l'opérateur de transformation en rotation R(t) entre le repère mobile BF et le pseudo repère de référence QEF par une fonction fondée sur le gyromètre.

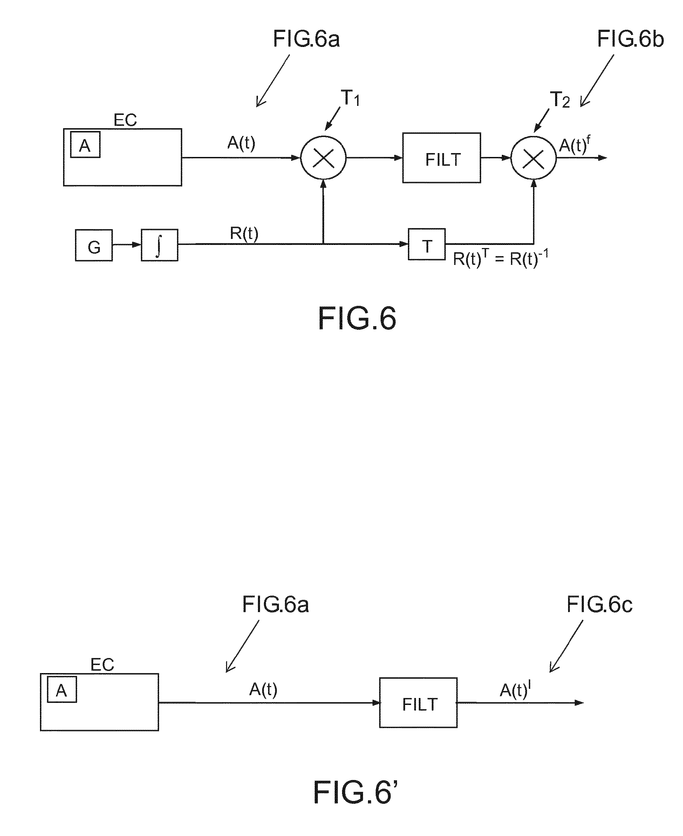

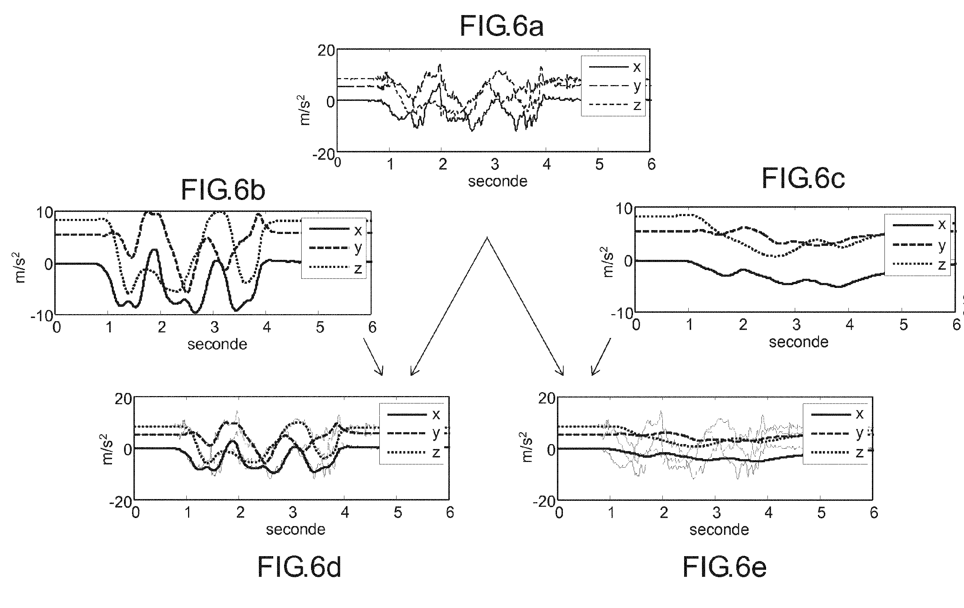

Les figures 6, 6a, 6b et 6d mettent en évidence les résultats de l'invention comparés aux résultats d'un filtrage direct dans le repère du capteur, comme cela est parfois présent dans les techniques de l'état de l'art illustrés par les figures 6', 6a,6c, 6e. La figure 6 représente le procédé de l'invention et la figure 6' représente le procédé de l'état de l'art. Les signaux de la figure 6a illustrent un exemple d'une tranche temporelle designaux mesurés et représentés dans l'espace des temps issus d'un accéléromètre à trois axes pour la même réalisation expérimentale que pour le scénario de la figure 5. La figure 6a présente les signaux à l'entrée du procédé de l'invention. Sur les figures 6c et 6e, sont illustrés les signaux filtrés selon l'art connu par simple application d'un filtre passe-bas (figure 6c), et la superposition des signaux bruts et filtrés selon l'art connu (en figure 6e). Sur les figures 6b et 6d, sont illustrés les signaux filtrés (figure 6b) selon un aspect de l'invention utilisant un gyromètre pour la détermination de l'opérateur T1 et T2, et la superposition des signaux bruts et filtrés (figure 6d) selon cet aspect de l'invention. On constate que le procédé de l'état de l'art déforme considérablement, par son opération de filtrage passe-bas les signaux du champ de gravité alors qu'il filtre correctement les accélérations propres, alors qu'ils sont correctement extraits par le procédé de l'invention. Les autres réglages d'un filtre passe-haut ou passe-bas et appliqués aux mesures dans le repère mobile sont également voués à l'échec par rapport aux avantages apportés par l'invention.

Les gyromètres, dans leur version bas coût, ou "low cost" en langue anglaise, présentent des dérive de biais qui peuvent être non négligeables, surtout dans la mesure où les calculs réalisés pour obtenir une matrice de rotation sont du type méthode intégrale, qui tendent à amplifier les effets de biais. En effet, il est courant d'observer des dérives de plusieurs centaines de degrés par heure. La méthode proposée ici reste bien robuste à ces problèmes de dérive à long terme dans la mesure. Il suffit d'adapter la fréquence de coupure du filtre selon la classe de biais du capteur. Plus le biais est important, plus les champs physiques constants dans le repère de la Terre auront tendance à dériver rapidement dans le repère QEF, et plus il faudra augmenter la fréquence de coupure pour ne pas détériorer le champ physique. L'invention est cependant toujours avantageuse, jusqu'à la limite où le gyromètre étant trop peu performant ne délivre plus d'information pertinente de QEF.

L'invention a été particulièrement décrite pour les cas d'un accéléromètre et pour les cas d'un magnétomètre. Elle est effectivement particulièrement pertinente pour les dispositifs embarquant l'un ou l'autre de ces capteurs.

Les dispositifs comportant en outre un gyromètre sont particulièrement adaptés à l'invention. Le gyromètre permet de calculer une estimation de la matrice de rotation entre le repère mobile BF et le pseudo repère de référence QEF, ce qui permet d'appliquer l'invention.

Les dispositifs comportant un gyromètre, ainsi qu'un accéléromètre et/ou un magnétomètre et ayant pour but de fournir une orientation du mobile par rapport au repère terrestre peuvent avantageusement appliquer l'invention. Dans ce mode avantageux, les résultats des filtrages de la mesure des accéléromètres et des magnétomètres initialement transformés dans le repère QEF, sont transformés du pseudo repère de référence QEF au repère mobile BF et en outre une étape supplémentaire, permet de calculer l'orientation du mobile dans le repère de référence, par exemple en utilisant une méthode dérivée de TRIAD ou de QUEST. L'homme de l'art connaissant ces méthodes appréciera l'effet avantageux de l'invention qui permet de réduire les contributions non voulues s'additionnant aux champs physiques, avant d'appliquer des méthodes dérivées de TRIAD (TRI-axial Attitude Deformation) ou QUEST (Quaternion ESTimator).

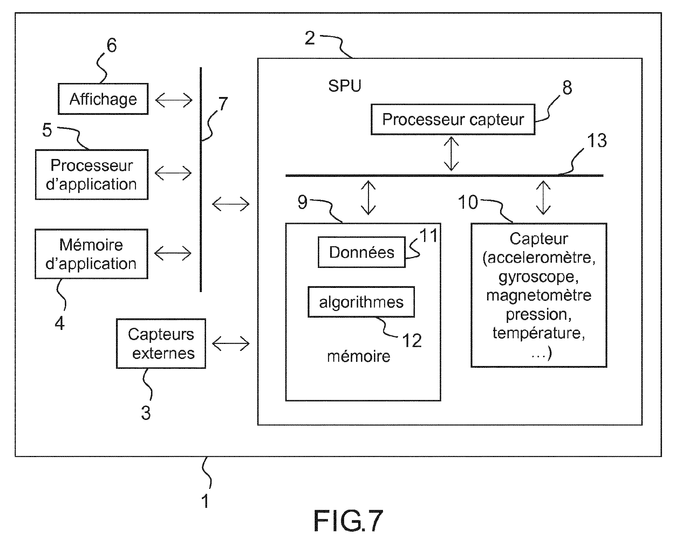

La figure 7 représente schématiquement un système 1 selon l'invention, tel un téléphone mobile.

Les détails concernant un mode de réalisation du système portable 1 comprenant les caractéristiques de cette divulgation sont dépeintes comme des blocs de haut niveau schématiques sur la figure 7.

Bien entendu, le système 1 peut être mis en oeuvre comme un appareil préhensible qui peut être déplacé dans l'espace par un utilisateur et dont le mouvement et/ou l'orientation dans l'espace peut par conséquent être détectée.

Par exemple, un tel appareil portatif peut être un téléphone mobile (par exemple, téléphone cellulaire, un téléphone fonctionnant sur un réseau local, ou tout autre combiné téléphonique), un téléphone filaire, un assistant numérique personnel (PDA), une console de jeu vidéo, une commande de jeu vidéo, un système de navigation, un dispositif traqueur d'activité physique (tel un bracelet ou clip), un capteur porté sur le pied, ou la jambe, une montre intelligente, un autre dispositif portable, un appareil Internet mobile (MID), un appareil de navigation personnelle (PND), un appareil photo numérique, une caméra vidéo numérique, des jumelles, un téléobjectif, un appareil à musique portable, un lecteur vidéo ou multimédia, une télécommande, un autre appareil de poche, ou une combinaison d'un ou plusieurs de ces dispositifs.

Dans certains modes de réalisation, le système 1 peut être un système autonome ou peut fonctionner en conjonction avec un autre appareil portable ou un dispositif non-portable comme un ordinateur de bureau, un serveur, etc., qui peuvent communiquer avec le système 1, par exemple, par l'intermédiaire de connexions réseau. Le système peut être capable de communiquer via une connexion filaire en utilisant tout type de protocole de communication filaire (comme les transmissions série, les transmissions parallèles, les communications de données à commutation par paquets...), via une connexion sans fil (comme le rayonnement électromagnétique, le rayonnement infrarouge ou une autre technologie sans fil), ou une combinaison d'une ou plusieurs connexions câblées et une ou plusieurs connexions sans fil.

Comme représenté, le système 1 comprend une unité de traitement capteur 2 (SPU pour Sensor Processing Unit), un ou plusieurs capteurs externes tels que le capteur externe 3, une mémoire d'application 4, un processeur d'application 5, et un écran d'affichage 6. Le terme externe fait référence à des capteurs 3 étant externe à l'unité de traitement capteur 2, et le capteur externe peut être inclus dans le système 1 ou un autre appareil. Le processeur d'application 5 peut être configuré pour effectuer les différents calculs et les opérations nécessaires à la fonction générale du système 1, et peut être couplé à l'unité de traitement capteur 2 SPU par un bus 7, qui peut être n'importe quel bus ou interface appropriée, par exemple une interconnexion de composant périphérique Express (PCIe) bus, un bus série universel (USB), un bus série émetteur/récepteur universel asynchrone (UART), une interface adaptée avancée d'architecture de bus de microcontrôleur (AMBA), un bus de circuits intégrés (I2C), un bus numérique entrée/sortie numérique série (SDIO), ou tout autre équivalent. Ma mémoire d'application 4 peut inclure des programmes, des pilotes, ou d'autres données qui utilisent des informations fournies par l'unité de traitement capteur 2.

Dans le mode de réalisation, l'unité de traitement capteur 2 comprend un processeur de capteur 8, une mémoire 9, et un ensemble capteur 10. La mémoire 9 comprend des données 10 et des algorithmes 11 pour effectuer des opérations telles que décrites dans les étapes de l'invention. Le processeur capteur peut comprendre une unité spécialisée pour réaliser des opération spécifiques comme l'opération d'intégration gyrométrique à cadence rapide. Les autres étapes de l'invention peuvent alors soit être traitées dans une autre unité de calcul plus générique du processeur capteur, soit à bord du processeur d'application.

L'ensemble capteur 10 peut comprendre un accéléromètre, et/ou un gyroscope, et/ou un magnétomètre, et/ou un capteur de pression, et/ou un capteur de température ... Tel qu'utilisé ici, l'ensemble capteur interne 10 peut utiliser les techniques MEMS pour l'intégration de l'unité de traitement capteur 2. Les composants de l'unité de traitement capteur 2, tels que le processeur de capteur 8 et les différents capteurs 10, peuvent être intégrés dans une seule puce ou sur un ensemble de puces.

La mémoire 9 et l'ensemble capteur 10 peuvent être couplés au processeur de capteur 8 par un bus 13, qui peut être n'importe quel bus ou interface appropriée.

De même, un capteur externe 3 tel que représenté est un capteur embarqué à bord du périphérique 1 qui n'est pas intégré dans l'unité de traitement capteur 2. Un accéléromètre et/ou un gyroscope et/ou tout autre capteur utilisé dans les techniques de la présente invention peut être mis en oeuvre comme capteur interne ou externe.

Bien entendu, le processeur d'application 5 et/ou le processeur de capteur 8 peuvent être un ou plusieurs microprocesseurs, des unités centrales de traitement (CPU pour "central processing unit" en langue anglaise), ou d'autres processeurs qui exécutent des programmes logiciels pour le système1 ou pour d'autres applications relatives à la fonctionnalité du système1. Par exemple, différents programmes d'application logiciels tels que les logiciels de navigation de menu, de jeux, de commande d'appareils photo, de logiciel de navigation, et de téléphone, ou une grande variété d'autres interfaces logicielles et fonctionnelles peuvent être concernés.

Dans certains modes de réalisation, de multiples applications différentes peuvent être fournies sur un même système 1, et dans certains de ces modes de réalisation, plusieurs applications peuvent fonctionner simultanément sur le système 1. Plusieurs couches de logiciel peuvent être fournies sur un support lisible par ordinateur telles que de la mémoire électronique ou un autre support de stockage comme un disque dur, un disque optique, un lecteur flash, etc..., pour une utilisation avec le processeur d'application 5 et le processeur de capteur 8.

Par exemple, une couche de système d'exploitation peut être prévue pour le système 1 pour commander et gérer les ressources système en temps réel, activer les fonctions des logiciels d'application et d'autres couches et interfacer des programmes d'application avec d'autres logiciels et fonctions du système 1.

Dans certains modes de réalisation, une ou plusieurs couches de l'algorithme de mouvement peuvent fournir des algorithmes de mouvement pour le traitement de niveau inférieur des données brutes des capteurs fournies par des capteurs interne ou externes. En outre, une couche de pilote de dispositif capteur peut fournir une interface logicielle aux capteurs matériels du système 1. Certaines ou toutes ces couches peuvent être prévues dans la mémoire d'application 4 pour un accès par le processeur d'application 5 à la mémoire 9 pour un accès par le processeur de capteur 8, ou dans toute autre architecture adaptée.

Les étapes du procédé décrit ci-dessus peuvent être réalisées par un ou plusieurs processeurs programmables exécutant un programme informatique pour réaliser les fonctions de l'invention en agissant sur des données d'entrée et en générant des données de sortie.

Un programme informatique peut être écrit dans n'importe quel langage de programmation, tels les langages compilés ou interprétés, et le programme informatique peut être déployé sous n'importe quelle forme, y compris en tant que programme autonome ou comme un sous-programme ou fonction, ou tout autre forme appropriée pour une utilisation dans un environnement informatique.

Un programme d'ordinateur peut être déployé pour être exécuté sur un ordinateur ou sur plusieurs ordinateurs sur un seul site ou sur plusieurs sites répartis et reliés entre eux par un réseau de communication.

## Revendications

1. Procédé de filtrage des signaux issus d'un ensemble capteur (EC) comprenant au moins un capteur de mesure (M, A) d'un champ physique vectoriel ($\vec{B}$, $\vec{G}$) sensiblement constant dans le temps et l'espace dans un repère de référence (EF), ledit ensemble capteur (EC) étant lié en mouvement à un repère mobile (BF), mobile dans le repère de référence (EF), le procédé comprenant les étapes consistant à :

   - appliquer une première transformation (T1) aux mesures d'un capteur de mesure (M, A) de l'ensemble capteur (EC), fournies dans le repère mobile (BF), vers un pseudo repère de référence (QEF), à l'aide d'un premier opérateur (R(t)) de changement de repère en rotation entre le repère mobile (BF) et le pseudo repère de référence (QEF);
   - appliquer un filtrage (FILT) aux mesures ainsi transformées dans le pseudo repère de référence (QEF); et
   - appliquer une deuxième transformation (T2), inverse de ladite première transformation, aux mesures filtrées par ledit filtrage (FILT), du repère de référence (QEF) vers le repère mobile (BF), à l'aide d'un deuxième opérateur ($R^{-1}(t)$) de changement de repère en rotation entre le pseudo repère de référence (QEF) et le repère mobile (BF), inverse dudit premier opérateur(R(t)).

2. Selon la revendication 1, dans lequel ledit deuxième opérateur ($R^{-1}(t)$), inverse dudit premier opérateur (R(t)), lorsque lesdits opérateurs sont des matrices de rotation, sont les matrices transposées ($R(t)^T$) l'une de l'autre.

**3.** Procédé selon la revendication 1 ou 2, dans lequel ledit premier opérateur (R(t)) est déterminé à partir de mesures fournies par un gyromètre (G) lié en mouvement au repère mobile (BF).

**4.** Procédé selon la revendication 3, dans lequel ledit premier opérateur (R(t)) est déterminé par intégration dans le temps des mesures fournies par ledit gyromètre (G), exécutée à une fréquence de calcul supérieure à la fréquence de calcul de l'application de la première transformation, du filtrage, et de la deuxième transformation.

**5.** Procédé selon la revendication 1 ou 2, dans lequel ledit premier opérateur (R(t)) est déterminé à partir de mesures fournies par une centrale d'attitude, un capteur optique, un capteur électromagnétique, ou un capteur mécanique.

**6.** Procédé selon l'une des revendications 1 à 5 dans lequel ledit filtrage (FILT) appliqué est adaptatif.

**7.** Procédé selon l'une des revendications 1 à 6 dans lequel ledit filtrage (FILT) appliqué est de type passe-haut afin d'extraire des contributions de hautes fréquences des mesures transformées dans le pseudo repère de référence (QEF).

**8.** Procédé selon l'une des revendications 1 à 6 dans lequel ledit filtrage (FILT) appliqué est de type passe-bas afin d'extraire des contributions de basses fréquences des mesures transformées dans le pseudo repère de référence (QEF).

**9.** Procédé selon l'une des revendications précédentes, dans lequel ledit ensemble capteur comprend un accéléromètre (A) et/ou un magnétomètre (M).

**10.** Procédé selon l'une des revendications précédentes, dans lequel lesdites étapes sont réalisées simultanément sur des signaux de capteurs de l'ensemble capteur (EC), issus d'au moins deux capteurs de mesure de deux champs physiques distincts et non colinéaires dans le repère de référence (EF).

**11.** Procédé selon l'une des revendications 1 à 10, comprenant en outre une étape consistant à déterminer l'orientation dudit ensemble capteur (EC) dans le repère de référence (EF) à partir desdites mesures obtenues après leur transformation par les étapes de la première transformation, du filtrage, et de la deuxième transformation.

**12.** Procédé selon l'une des revendications 1 à 10, comprenant en outre une étape supplémentaire consistant à déterminer l'orientation dudit pseudo repère de référence (QEF) par rapport au repère de référence (EF), à partir desdites mesures obtenues après leur transformation par les étapes de la première transformation et du filtrage, et ce avant d'appliquer la seconde transformation sur l'orientation ainsi déterminée par l'étape supplémentaire, pour obtenir finalement l'orientation dudit ensemble capteur (EC) dans le repère de référence (EF).

**13.** Système de filtrage des signaux issus d'un ensemble capteur (EC) comprenant au moins un capteur de mesure (M, A) d'un champ physique vectoriel ($\vec{B}$, $\vec{G}$) sensiblement constant dans le temps et l'espace dans un repère de référence (EF), ledit ensemble capteur (EC) étant lié en mouvement à un repère mobile (BF), mobile dans le repère de référence (EF), comprenant une unité de calcul adaptée pour :

- appliquer une première transformation (T1) aux mesures d'un capteur de mesure (M, A) de l'ensemble capteur (EC), fournies dans le repère mobile (BF), vers un pseudo repère de référence (QEF), à l'aide d'un premier opérateur (R(t)) de changement de repère en rotation entre le repère mobile (BF) et le pseudo repère de référence (QEF);
- appliquer un filtrage (FILT) aux mesures ainsi transformées dans le pseudo repère de référence (QEF); et
- appliquer une deuxième transformation (T2), inverse de ladite première transformation, aux mesures filtrées par ledit filtrage (FILT), du repère de référence (QEF) vers le repère mobile (BF), à l'aide d'un deuxième opérateur ($R^{-1}$ (t)) de changement de repère en rotation entre le pseudo repère de référence (QEF) et le repère mobile (BF), inverse dudit premier opérateur.

FIG.1

FIG.2

FIG.3

FIG.4a

FIG.4b

FIG.4c

FIG.4d

signal utile
accélération & perturbation
bruit blanc

FIG.4

FIG.5a

FIG.5b

FIG.5c

FIG.5d

FIG.5

FIG.6a

FIG.6b

T₁

T₂

EC

A

A(t)

✕

FILT

✕

A(t)$^f$

G

∫

R(t)

T

R(t)$^T$ = R(t)$^{-1}$

## FIG.6

FIG.6a

FIG.6c

EC

A

A(t)

FILT

A(t)$^I$

## FIG.6'

FIG.6a

FIG.6b

FIG.6c

FIG.6d

FIG.6e

EP 3 211 370 A1

FIG.7

27

# EP 3 211 370 A1

Europäisches
Patentamt

European
Patent Office

Office européen
des brevets

## RAPPORT DE RECHERCHE EUROPEENNE

Numéro de la demande

EP 16 30 5230

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 2015/346003 A1 (YOUSSEF JOE [FR]) 3 décembre 2015 (2015-12-03) * alinéa [0068] - alinéa [0112]; figures 6,7 * ----- | 1-7,9-13 | INV. G01C17/38 G01C21/16 |
| A | US 2012/176492 A1 (GARIN LIONEL J [US]) 12 juillet 2012 (2012-07-12) * alinéa [0035] - alinéa [0065] * ----- | 1-13 | |
| A | US 2012/075109 A1 (WANG XIANGHUI [US] ET AL) 29 mars 2012 (2012-03-29) * le document en entier * ----- | 1-13 | |

| DOMAINES TECHNIQUES RECHERCHES (IPC) |
|---|
| G01C |

Le présent rapport a été établi pour toutes les revendications

| Lieu de la recherche | Date d'achèvement de la recherche | Examinateur |
|---|---|---|
| La Haye | 23 août 2016 | Neering, Jan Julius |

CATEGORIE DES DOCUMENTS CITES

X : particulièrement pertinent à lui seul
Y : particulièrement pertinent en combinaison avec un
autre document de la même catégorie
A : arrière-plan technologique
O : divulgation non-écrite
P : document intercalaire

T : théorie ou principe à la base de l'invention
E : document de brevet antérieur, mais publié à la
date de dépôt ou après cette date
D : cité dans la demande
L : cité pour d'autres raisons

.......................................................................................
& : membre de la même famille, document correspondant

EPO FORM 1503 03.82 (P04C02)

28

## EP 3 211 370 A1

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

23-08-2016

| Document brevet cité au rapport de recherche | Date de publication | Membre(s) de la famille de brevet(s) | Date de publication |
|---|---|---|---|
| US 2015346003    A1 | 03-12-2015 | FR      2999703 A1<br>US  2015346003 A1<br>WO  2014095476 A1 | 20-06-2014<br>03-12-2015<br>26-06-2014 |
| US 2012176492    A1 | 12-07-2012 | CN       103328928 A<br>EP      2663838 A2<br>JP      5710784 B2<br>JP  2014505249 A<br>US  2012176492 A1<br>WO  2012096876 A2 | 25-09-2013<br>20-11-2013<br>30-04-2015<br>27-02-2014<br>12-07-2012<br>19-07-2012 |
| US 2012075109    A1 | 29-03-2012 | US  2012075109 A1<br>US  2015204900 A1 | 29-03-2012<br>23-07-2015 |

EPO FORM P0460

Pour tout renseignement concernant cette annexe : voir Journal Officiel de l'Office européen des brevets, No.12/82

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2010007160 A

- FR 2976353

**Littérature non-brevet citée dans la description**

- **SABATINI A.M.** Quaternion-based extended Kalman filter for détermination orientation by inertial and magnetic sensing. *IEEE Transactions on Biomedical Engineering,* 2006, vol. 53 (7